(19) Europäisches Patentamt
European Patent Office
Office européen des brevets

(11) EP 4 503 467 A1

(12) EUROPEAN PATENT APPLICATION

(43) Date of publication:
**05.02.2025 Bulletin 2025/06**

(21) Application number: **24192142.8**

(22) Date of filing: **31.07.2024**

(51) International Patent Classification (IPC):
***H04B 7/08*** *(2006.01)* ***H04B 7/06*** *(2006.01)*

(52) Cooperative Patent Classification (CPC):
**H04B 7/088; H04B 7/0695; H04B 7/086; H04B 17/328; H04B 17/3913**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.08.2023 KR 20230102288**
**14.11.2023 KR 20230157686**

(71) Applicant: **SAMSUNG ELECTRONICS CO., LTD.**
**Yeongtong-gu**
**Suwon-si, Gyeonggi-do 16677 (KR)**

(72) Inventors:
- **KIM, Doyeon**
  **16677 Suwon-si (KR)**
- **LEE, Junho**
  **16677 Suwon-si (KR)**
- **CHOI, Yoojin**
  **16677 Suwon-si (KR)**

(74) Representative: **Marks & Clerk LLP**
**15 Fetter Lane**
**London EC4A 1BW (GB)**

# (54) ELECTRONIC DEVICE FOR PERFORMING BEAM MANAGEMENT BASED ON NEURAL NETWORK AND OPERATION METHOD THEREOF

(57) An electronic device includes at least one memory, a communication interface including an antenna array configured to form a plurality of candidate beams, and at least one processor operatively connected to the communication interface and the at least one memory. The at least one processor is configured to generate a plurality of pieces of reference signal received power (RSRP) pattern data based on an RSRP measured in each of the plurality of candidate beams with respect to a signal received from an external device; estimate an angle of arrival (AoA) distribution for each of the plurality of pieces of RSRP pattern data, by applying each of the plurality of pieces of RSRP pattern data to a neural network that is trained based on a deep-learning algorithm; and perform a beam management for a wireless communication with the external device, based on the estimated AoA distribution.

FIG. 8

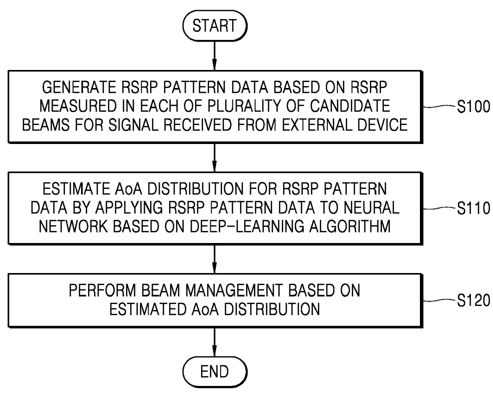


EP 4 503 467 A1

## Description

BACKGROUND

One or more example embodiments of the disclosure relate to an electronic device for neural network-based beam management in a wireless communication system and an operation method thereof.

Recently, as wireless communication technology has developed, high frequency bands in millimeter wave bands are utilized to ensure faster communication performance in wireless communication systems (e.g., $5^{th}$ generation (5G) new radio (NR) communication systems). Communication via the millimeter wave bands enables high-speed communication by utilizing wider bandwidths than frequency bands (e.g., sub-6GHz bands) used in existing wireless communication systems. However, in the communication via the millimeter wave bands, a channel propagation loss may be large because a high frequency band is used. An electronic device may reduce the channel propagation loss by using beam forming technology using an antenna array. In a wireless communication system, the electronic device may improve the quality of wireless communication by focusing signals in specific directions based on beam forming technology. The electronic device (e.g., terminal) may determine candidate beams in advance to select an optimal beam that matches a wireless communication environment during a beam training process. Also, a final beam to be applied to the antenna array may be selected by comparing measurement results of signal qualities between a beam of an external device (e.g., base station) to the candidate beams of the electronic device.

In particular, during this beam training process, the electronic device (e.g., terminal) has physical limitations in that the beam width cannot be made very small due to spatial constraints. As a result, the electronic device has difficulty performing precise beam alignment with the beam of the external device (e.g., base station) even though the number of candidate beams increases.

Also, as the number of candidate beams of the electronic device (e.g., terminal) increases, the performance of beam alignment between the beam of the external device (e.g., base station) and the candidate beams of the electronic device may be improved. However, consumption of communication resources increases in proportion to the increased number of candidate beams, and accordingly, overhead of the beam training process may increase. This increase in overhead causes performance degradation or communication quality deterioration in the wireless communication system.

SUMMARY

One or more example embodiments of the disclosure provide an electronic device and an operation method thereof, wherein the electronic device is capable of using a neural network trained via a deep-learning algorithm, estimating angle of arrival (AoA) distribution for reference signal received power (RSRP) pattern data measured from a plurality of candidate beams of the electronic device, and performing beam management using the estimated AoA distribution.

The technical objects of the inventive concept are not limited to the technical objects mentioned above, and other technical objects not described herein are clearly understood by those skilled in the art from the following descriptions.

According to an aspect of an example embodiment of the disclosure, there is provided an electronic device including at least one memory configured to store computer-readable instructions; a communication interface including an antenna array, the antenna array being configured to form a plurality of candidate beams; and at least one processor operatively connected to the communication interface and the at least one memory, wherein the at least one processor is configured to execute the computer-readable instructions to: generate a plurality of pieces of reference signal received power (RSRP) pattern data based on an RSRP measured in each of the plurality of candidate beams with respect to a signal received from an external device; estimate an angle of arrival (AoA) distribution for each of the plurality of pieces of RSRP pattern data, by applying each of the plurality of pieces of RSRP pattern data to a neural network that is trained based on a deep-learning algorithm; and perform a beam management for a wireless communication with the external device, based on the estimated AoA distribution. In some embodiments, the neural network(e.g., angle of arrival estimation model) is trained, via the deep-learning algorithm, to estimate angle of arrival distributions corresponding to each of a plurality of pieces of RSRP pattern training data with respect to the plurality of candidate beams, by using the plurality of pieces of RSRP pattern training data as input data to the neural network. In other words, the training may comprise estimating each of the angle of arrival distributions derived during training based on a respective one of the plurality of pieces of RSRP pattern training data. Each piece of RSRP pattern training data may comprise a measured RSRP for each of the candidate beams.

In some embodiments, the step of performing a beam management for a wireless communication with the external device, based on the estimated AoA distribution, comprises selecting a target beam based on a matching probability for that target beam in the estimated AoA distribution.

In some embodiments, in performing the beam management, the at least one processor is configured to execute the computer-readable instructions to: select at least two candidate angle of arrival classes based on the angle of arrival distribution, wherein each of the at least two candidate angle of arrival classes has a matching probability with a corresponding piece of reference signal received power pattern data greater than or equal to a predetermined threshold in the angle of arrival distribution; select a target beam based on the at least two candidate angle of arrival classes; and perform the wireless communication with the external device using the target beam.

In some embodiments, wherein, in selecting the target beam the at least one processor is configured to execute the computer-readable instructions to: measure at least one channel indicator for channels based on beams corresponding to the at least two candidate angle of arrival classes; and select the target beam based on the at least one channel indicator, wherein the at least one channel indicator comprises at least one of a reference signal received power, a signal-to-noise ratio, and a reference signal received quality of a signal passing through the channels.

In some embodiments, the at least one processor is further configured to select, as the target beam, a beam generated by combining beams corresponding to the at least two candidate angle of arrival classes together.

According to an aspect of an example embodiment of the disclosure, there is provided a method of operating an electronic device, the method including generating a plurality of pieces of reference signal received power (RSRP) pattern data based on an RSRP measured in each of a plurality of candidate beams with respect to a signal received from an external device; estimating an angle of arrival (AoA) distribution for each of the plurality of pieces of RSRP pattern data by applying each of the plurality of pieces of RSRP pattern data to a neural network that is trained based on a deep-learning algorithm; and performing a beam management for a wireless communication with the external device, based on the estimated AoA distribution.

According to an aspect of an example embodiment of the disclosure, there is provided a method of operating a wireless communication system, the method including forming a plurality of candidate beams for performing a wireless communication with an external device; generating an angle of arrival (AoA) estimation model via deep-learning, by using, as input, a plurality of pieces of reference signal received power (RSRP) pattern training data for the plurality of candidate beams and using, as output, an AoA distribution corresponding to each of the plurality of pieces of RSRP pattern training data; generating a plurality of pieces of RSRP pattern data by measuring an RSRP in each of the plurality of candidate beams with respect to a signal received from the external device; estimating an AoA distribution for each of the plurality of pieces of RSRP pattern data, by applying each of the plurality of pieces of RSRP pattern data to the AoA estimation model; and performing a beam management based on the estimated AoA distribution.

At least some of the above and other features of the invention are set out in the claims.

BRIEF DESCRIPTION OF DRAWINGS

Example embodiments will be more clearly understood from the following detailed description taken in conjunction with the accompanying drawings, in which:

FIG. 1 shows an example of operating an electronic device, according to one or more embodiments;

FIG. 2 is a block diagram showing an electronic device according to one or more embodiments;

FIG. 3A is a diagram illustrating an example of a training operation of neural networks according to one or more embodiments;

FIG. 3B is a diagram illustrating an example of training data of the neural networks according to one or more embodiments;

FIG. 3C is a diagram illustrating an example of a training result of the neural networks according to one or more embodiments;

FIG. 4A is a diagram illustrating an example of an operation of beam management of the electronic device according to one or more embodiments;

FIG. 4B is a diagram illustrating an example of an operation of the beam management of the electronic device according to one or more embodiments;

FIG. 5A is a diagram illustrating an example of an operation of beam management of the electronic device according to one or more embodiments;

FIG. 5B is a diagram illustrating an example of an operation of the beam management of the electronic device according to one or more embodiments;

FIG. 5C is a diagram illustrating an example of an operation of the beam management of the electronic device according to one or more embodiments;

FIG. 6 is a diagram illustrating an example of an operation of beam management of the electronic device according to one or more embodiments;

FIG. 7 is a diagram illustrating an example of an operation of beam management of the electronic device according to one or more embodiments;

FIG. 8 is a flowchart showing a method of operating an electronic device, according to one or more embodiments;

FIG. 9 is a flowchart showing a method of operating the electronic device, according to one or more embodiments;

FIG. 10 is a flowchart showing a method of operating the electronic device, according to one or more embodiments; and

FIG. 11 is a schematic block diagram showing a wireless communication system according to one or more embodiments.

## DETAILED DESCRIPTION

Hereinafter, example embodiments are described in detail with reference to the accompanying drawings. In the example embodiments of the present disclosure, the components according to the inventive concept are expressed in the singular or plural form, depending on the presented embodiments. However, the singular or plural expression is chosen for ease of description and appropriately to the presented context, and the disclosure is not limited to the singular or plural components, and components expressed in the plural form may be configured as a single component, and/or a component expressed in the singular form may be configured as a plurality of components (e.g., a neural network or neural networks).

For convenience of description, the inventive concept uses some of the terms and terminologies defined in the 3rd generation partnership project (3GPP) long term evolution (LTE) standard or the new radio (NR) standard. However, the inventive concept is not limited by the above terms and terminologies and may be applied, in the same manner, to systems complying with other standards.

A wireless communication system according to one or more embodiments may include, as a non-limiting example, an NR system, a 5th generation (5G) system, an LTE system, a code division multiple access (CDMA) system, a global system for mobile communications (GSM) system, a wireless local area network (WLAN) system, and/or any other wireless communication system. Hereinafter, a wireless communication system is described assuming that this system is an NR system, LTE system, or system capable of supporting NR and LTE-based communication. However, it is understood that the inventive concept is not limited thereto.

An electronic device (e.g., a terminal) according to one or more embodiments may be referred to as, for example, user equipment, a mobile station (MS), a mobile terminal (MT), a user terminal, a subscriber station (SS), a wireless device, a handheld device, etc.

The electronic device (e.g., the terminal) according to one or more embodiments may support 4th generation (4G) communication (e.g., LTE), LTE advanced (LTE-A), and 5G communications (e.g., NR) specified in the 3GPP standard.

For 4G communication and 5G communication, the electronic device (e.g., the terminal) according to one or more embodiments may support a CDMA-based communication protocol, a wideband CDMA (WCDMA)-based communication protocol, a time division multiple access (TDMA)-based communication protocol, a frequency division multiple access (FDMA)-based communication protocol, an orthogonal frequency division multiplexing (OFDM)-based communication protocol, a cyclic prefix (CP)-OFDM-based communication protocol, a discrete Fourier transform-spread-OFDM (DFT-s-OFDM)-based communication protocol, non-orthogonal multiple access (NOMA), a generalized frequency division multiplexing (GFDM)-based communication protocol, etc.

In one or more embodiments, wireless communication may be performed based on any one of 5G communication (e.g., NR) (e.g., FR1 band or FR2 band of 5G communication), 4G communication (e.g., LTE or LTE-A), ultra wide band (UWB), and wireless fidelity (Wi-Fi), which enable high-speed data transmission between an external device (e.g., a base station) and an electronic device (e.g., a terminal).

The external device (e.g., a base station) according to one or more embodiments may refer to a fixed station that communicates with the electronic device (e.g., the terminal) and/or other base stations. For example, the external device (e.g., the base station) may be referred to as a Node B, evolved-Node B (eNB), sector, site, base transceiver system (BTS), access point (AP), relay node, remote radio head (RRH), radio unit (RU), etc. For example, in the wireless communication system, the external device (e.g., the base station) includes at least one cell, as a minimum unit of region for providing communication services for each of external devices (e.g., base stations). The external device (e.g., the base station) may provide efficient multiple access communication for a plurality of terminals based on specific frequency resources allocated to each cell. In particular, in a multiple-input and multiple-output (MIMO) system, the electronic device (e.g., the terminal) and the external device (e.g., the base station) may perform wireless communication between the electronic device (e.g., the terminal) and the external device (e.g., the base station) based on a plurality of component carriers.

In this specification, reference signal received power (RSRP) pattern data may refer to data including an RSRP value measured in each of a plurality of candidate beams of an electronic device (e.g., 100 in FIG. 1) with respect to a signal received from the external device (e.g., the base station).

In this specification, the RSRP pattern training data may include RSRP values measured from the plurality of candidate beams while changing an angle (e.g., an angle of arrival (AoA)) of the electronic device in advance or may include RSRP values of the plurality of candidate beams obtained by prior experiments, as data input to neural networks (e.g., 111 in FIG. 1) when training the neural networks.

In this specification, AoA distribution may include distribution of matching probabilities between the RSRP pattern training data and each of AoA classes, as probability distribution for each AoA class estimated by the neural networks (e.g., using a deep-learning algorithm).

In this specification, the AoA class may refer to an AoA in a predetermined angle unit (e.g., 5 degrees), as a value to be estimated by the neural networks (e.g., using the deep-learning algorithm).

In this specification, a dominant AoA class may refer to an AoA class that has a significantly high matching probability (e.g., has the highest matching probability) in the AoA distribution estimated by the neural networks (e.g., using the deep-learning algorithm).

In this specification, candidate AoA classes may refer to at least two AoA classes having matching probabilities greater than or equal to a threshold in the estimated AoA distribution if there is no dominant AoA class in the AoA distribution estimated by the neural networks (e.g., using the deep-learning algorithm).

In this specification, the neural networks may refer to neural networks, which are trained to receive the RSRP pattern training data for the plurality of candidate beams of the electronic device and estimate the AoA distribution corresponding to the RSRP pattern training data via the deep-learning algorithm.

FIG. 1 shows an example of operating an electronic device 100, according to one or more example embodiments.

Referring to FIG. 1, the electronic device 100 may include a processor 110 and neural networks 111. FIG. 1 shows components (e.g., the processor 110 and the neural networks 111) of the electronic device 100, but these components are only some of components of the electronic device 100. The electronic device 100 may further include various other components. Some specific components of the electronic device 100 will be described below with reference to FIG. 2.

In FIG. 1, an antenna array (not shown) of the electronic device 100 may form a predetermined number of candidate beams depending on characteristics of a wireless communication system and/or states of wireless communication. For example, the candidate beams of the electronic device 100 may include all beams included in a predefined beam codebook or some beams included in the predefined beam codebook based on the wireless communication system and/or the states of wireless communication. In order to cover all spatial domains that may receive signals from external devices, the candidate beams of the electronic device 100 (based on a predetermined number of candidate beams) may be arranged so as not to overlap each other in a space (low-resolution characteristics of RSRP pattern data 10). For example, the candidate beams of the electronic device 100 may include a zeroth candidate beam corresponding to a -60 degree region in the spatial domain, a first candidate beam corresponding to a -40 degree region in the spatial domain, a second candidate beam corresponding to a -20 degree region in the spatial domain, a third candidate beam corresponding to a 0 degree region in the spatial domain, a fourth candidate beam corresponding to a 20 degree region in the spatial domain, a fifth candidate beam corresponding to a 40 degree region in the spatial domain, and a sixth candidate beam corresponding to a 60 degree region in the spatial domain.

In one or more embodiments, the neural networks 111 of the electronic device 100 may receive the RSRP pattern data 10 (e.g., having low-resolution) and output (or estimate) an AoA distribution 20 (or AoA class) (e.g., having high-resolution). That is, the neural networks 111 may convert the RSRP pattern data 10 (low-resolution) into the AoA distribution 20 (high-resolution). The RSRP pattern data 10, as data input to the neural networks 111, may include RSRP measured from each of a plurality of candidate beams of the electronic device 100 with respect to a signal received from an external device (e.g., a base station). Also, the AoA distribution 20, as data output from the neural networks 111, may include a distribution of matching probabilities between the RSRP pattern data 10 and each angle of AoA classes. For example, beams corresponding to the AoA classes may cover an angular range of a preset unit in the spatial domain (e.g., 0 degree, 10 degrees, 15 degrees, ... , 75 degrees, etc.), and the beams corresponding to the AoA classes may be set to be finer than a beam spacing of the candidate beams and/or a beam width of the candidate beams (high-resolution characteristics of the AoA distribution 20). In other words, the angles between beams corresponding to the AoA classes is smaller than the angles between candidate beams for which the RSRP is measured. For example, the AoA distribution 20 may include a first AoA class corresponding to a 0 degree region in the spatial domain, a first AoA class corresponding to a 5 degree region in the spatial domain, a second AoA class corresponding to a 10 degree region in the spatial domain, ... , a 36th AoA class corresponding to a 180 degree region in the spatial domain. It can be seen that a cover region of the beams corresponding to the AoA classes is of high-resolution beams divided more finely in 5 degree units, compared to a cover region of the candidate beams of the electronic device 100 described above, which is of low-resolution beams divided in 20 degree units. The deep-learning-based training process of the neural networks 111 for outputting (or estimating) the AoA distribution 20 will be described below with reference to FIG. 3A.

In one or more embodiments, the processor 110 may perform beam management based on the output AoA distribution 20 (high-resolution). Here, the beam management may include a beam selection operation, a beam training operation, and/or a beam recovery operation of the electronic device 100. The beam selection operation and the beam training operation using the AoA distribution 20 (high-resolution) of the electronic device 100 will be described below with reference to FIGS. 4A to 7. For example, the electronic device 100 may select a high-resolution optimal beam (e.g., an optimal beam in a fine angular range) to ensure optimal wireless communication performance based on the AoA distribution 20. When the electronic device 100 includes a plurality of antenna arrays, the beam management of the electronic device 100 may be performed by each of the plurality of antenna arrays, which will be described below.

The device and method according to one or more embodiments may use the neural networks trained via deep learning (without requiring to change hardware or improve hardware performance of the electronic device 100) to estimate the AoA distribution (or AoA class) corresponding to the input RSRP pattern data and may select the high-resolution optimal beam for wireless communication with an external device based on the estimated AoA distribution (or AoA class). Accordingly, the wireless communication performance between devices may be improved by minimizing an overhead of a beam training process.

FIG. 2 is a block diagram showing an electronic device 100 according to one or more example embodiments.

Referring to FIG. 2, the electronic device 100 may include a processor 110, a communication interface 120, a sensor 130, and a memory 140, wherein the processor 110 includes neural networks 111.

In one or more embodiments, the processor 110 may execute programs and/or processes stored in the memory 140 to control operations of the electronic device 100. In some embodiments, the processor 110 may store, in the memory 140, program code that is executed to perform an operation of training the neural networks 111 according to example embodiments (e.g., FIG. 3A) and an operation of performing the beam management based on the trained neural networks 111 according to example embodiments (e.g., FIGS. 4A to 7 and 8 to 10). The processor 110 may access the memory 140 and execute the stored program code. Accordingly, the processor 110 may estimate, via the neural networks 111, the AoA distribution corresponding to RSRP pattern data measured from a plurality of candidate beams of the communication interface 120 and may control beam management such that the beam management is performed based on the estimated AoA distribution. While it is described in FIG. 2 that one processor 110 and one memory 140 are provided, example embodiments are not limited thereto and the electronic device 100 may include two or more number of processors 110 and two or more number of memories 140.

In one or more embodiments, the processor 110 may include the neural networks 111. In one embodiment, the neural networks 111 may be provided as a logic block formed by logic synthesis, a software block performed by a processor, and/or a combination thereof. In one or more embodiments, the neural networks 111 may include a procedure as a set of a plurality of instructions executed by the processor 110 and may be stored in a memory accessible by the processor 110.

In one or more embodiments, the neural networks 111 may be trained to estimate the AoA distribution corresponding to the RSRP pattern training data for the plurality of candidate beams via a deep-learning algorithm, using the RSRP pattern training data as input data. This will be described below in detail with reference to FIGS. 3A to 3C.

In one or more embodiments, the neural networks 111 may use the trained deep-learning algorithm and estimate the AoA distribution (high-resolution) based on the RSRP pattern data (low-resolution) measured in the plurality of candidate beams with respect to the signal received from the external device. Here, the AoA distribution may include distribution of matching probabilities between the RSRP pattern data and each of AoA classes. Also, beams corresponding to the AoA classes may be set to be finer than a beam spacing of the candidate beams and/or a beam width of the candidate beams (high-resolution characteristics of the AoA distribution).

The neural networks 111 may use a multi-layer perception model, a gradient descent-based learning algorithm, a cross entropy function model, and/or the like, as a deep-learning algorithm (or a deep-learning model). However, the deep-learning algorithm (or deep-learning model) of the neural networks 111 according to embodiments is not limited thereto, and other types of deep-learning algorithms (or deep-learning models) may be used.

The processor 110 may perform the beam management based on the AoA distribution received from the neural networks 111. Example embodiments of the beam management operation of the processor 110 will be described below with reference to FIGS. 4A to 7. For example, the processor 110 may determine an AoA class corresponding to the RSRP pattern data (low-resolution) and select, as a target beam, a beam corresponding to the determined AoA class from a high-resolution beam codebook. The processor 110 may control the communication interface 120 and perform wireless communication with an external device (e.g., a base station) using the target beam.

In one or more embodiments, if the position of the electronic device 100 and/or the orientation of the electronic device 100 changes after the target beam is selected, the processor 110 may generate correction information for the target beam based on sensing data (e.g., data indicating an amount of change in the orientation of the electronic device 100) received from the sensor 130 and then correct the existing target beam based on the generated correction information. The processor 110 may select the corrected existing target beam as a final target beam and perform wireless communication with an external device (e.g., a base station) using the final target beam.

The communication interface 120 may include at least one antenna array including a plurality of antennas. Also, the communication interface 120 may form the plurality of candidate beams using the plurality of antennas (or the antenna array). The communication interface 120 may transmit a signal to an external device (e.g., a base station) via the plurality of candidate beams and/or receive a radio frequency (RF) signal from an external device (e.g., a base station) via the plurality of candidate beams. The communication interface 120 may generate intermediate frequency or baseband signals by down-converting RF signals received from an external device. The processor 110 may generate data signals by filtering, decoding, and/or digitizing the intermediate frequency or baseband signals. The processor 110 may additionally process data signals transmitted to and received from the external device. The processor 110 may control the communication interface 120 and generate the RSRP pattern data (low-resolution) including the RSRP data measured in each of the plurality of candidate beams with respect to the signal received from the external device.

Also, the communication interface 120 may receive data signals from the processor 110. The communication interface 120 may perform encoding, multiplexing, analog-converting on the received data signals. The communication interface 120 may up-convert the frequencies of the intermediate frequency or baseband signals output from the processor 110 and transmit the converted intermediate frequency or baseband signals as RF signals to the external device via the plurality of candidate beams.

The sensor 130 may detect operating conditions (e.g., position, power, temperature, etc.) of the electronic device 100 or external environmental conditions (e.g., state of a user, etc.) and may generate electric signals and/or data values corresponding to the detected conditions. The sensor 130 may include, for example but not limited to, a gesture sensor, gyro sensor, barometric pressure sensor, magnetic sensor, acceleration sensor, grip sensor, proximity sensor, color sensor, infrared (IR) sensor, biometric sensor, temperature sensor, humidity sensor, and/or illuminance sensor. For example, when the position of the electronic device 100 or the orientation of the electronic device 100 changes, the sensor 130 may generate sensing data indicating the amount of change in the orientation of the electronic device 100 from each of reference axes (e.g., a horizontal axis (x), a vertical axis (y), and a height axis (z)) based on a position (e.g., considered as an origin) before change of the electronic device 100 and may transmit the sensing data to the processor 110.

The memory 140 may include an operating system and may include an application and/or a process register equipped with device drivers, executable libraries, and/or program code. The operating system and application may be provided as software elements and may be implemented by executing code and/or commands using a processor. For example, the memory 140 may store program code that is executed to perform the operation of training the neural networks 111 according to example embodiments (e.g., FIG. 3A) and the operation of performing the beam management based on the trained neural networks 111 according to example embodiments (e.g., FIGS. 4A to 7 and 8 to 10).

According to embodiments, provided are an electronic device and a method of operating the electronic device. The electronic device may use neural networks trained by a deep-learning algorithm, estimate an AoA distribution for RSRP pattern data measured from a plurality of candidate beams of the electronic device, and perform the beam management, thereby minimizing the overhead of the beam training.

The electronic device and the method of operating the electronic device according to example embodiments may perform a wireless communication with an external device via a high-resolution target beam selected using AoA distribution estimated by the neural networks, thereby improving wireless communication qualities.

FIG. 3A is a diagram illustrating an example of a training operation of the neural networks 111 according to one or more example embodiments.

Referring to FIG. 3A, the neural networks 111 may be trained to estimate and output the AoA distribution (or AoA class) corresponding to the RSRP pattern training data using the deep-learning algorithm, when the RSRP pattern training data is input to the neural networks 111. The RSRP pattern training data may refer to the RSRP pattern data for the plurality of candidate beams that have been measured or tested in advance to train the neural networks 111 (or to be used in the deep-learning algorithm of the neural networks 111). The AoA distribution may include distribution of matching probabilities between the RSRP pattern training data and each of AoA classes, as probability distribution for each AoA class estimated by the neural networks 111. The neural networks 111 may be trained to estimate and output the AoA class corresponding to the RSRP pattern training data.

A ground truth for training the neural networks 111 may include a true AoA (e.g., an ideal AoA distribution or ideal AoA class) as a label value of the RSRP pattern training data in the deep-learning algorithm (or the deep-learning model). For example, a true AoA (e.g., the ideal AoA distribution (or the ideal AoA class) corresponding to the RSRP pattern training data) may be labeled in the RSRP pattern training data, and the neural networks 111 may be trained based on the labeled data. As an example of the labeling, a one-hot vector with a dimension corresponding to a number of AoA classes constituting the AoA distribution for 'LoS RSRP pattern' may be set as a label. The RSRP pattern training data may be generated using all beams or some beams of the plurality of candidate beams of the electronic device 100. In the RSRP pattern training data, a field corresponding to an unused beam among the plurality of candidate beams may include '0'. A mean squared error (MSE) function or a cross entropy function may be used as a loss function for training the neural networks 111. The neural networks 111 may be trained based on shuffled RSRP pattern training data. The neural networks 111 according to embodiments may be trained based on various deep-learning algorithms (or deep-learning models) and loss functions related thereto in addition to the functions described above.

The neural networks 111 may be trained to adjust parameters or weights in order to minimize the difference between the AoA distribution estimated for the RSRP pattern training data (e.g., the output value of the neural networks 111) and the pre-labeled ground truth (e.g., the true AoA).

FIG. 3B is a diagram illustrating an example of training data of the neural networks 111 according to one or more example embodiments.

In detail, FIG. 3B shows the RSRP pattern training data (e.g., first RSRP pattern training data 311 and second RSRP pattern training data 321) and the true AoA (or ground truth) (e.g., a first true AoA 315 and a second true AoA 325) labeled on each piece of RSRP pattern training data as an example of training data of the neural networks 111 of FIG. 3A. The neural networks 111 according to one or more embodiments may be trained based on the true AoA (e.g., the ideal AoA distribution or ideal AoA class) corresponding to the RSRP pattern training data.

In FIG. 3B, it is assumed that the plurality of candidate beams of the electronic device 100 may include a zeroth candidate beam corresponding to a -60 degree region in the spatial domain, a first candidate beam corresponding to a -40 degree region in the spatial domain, a second candidate beam corresponding to a -20 degree region in the spatial domain, a third candidate beam corresponding to a 0 degree region in the spatial domain, a fourth candidate beam corresponding to a 20 degree region in the spatial domain, a fifth candidate beam corresponding to a 40 degree region in the spatial domain, and a sixth candidate beam corresponding to a 60 degree region in the spatial domain. In addition, in FIG. 3B, the true AoA (e.g., ground truth) for training the neural networks 111 may be set to an angle of 5 degrees. In FIG. 3B, the true AoA is assumed to indicate the ideal AoA class corresponding to RSRP pattern training data. Here, for example, the RSRP pattern training data for each of ideal AoA classes may include the RSRP values measured in the plurality of candidate beams while changing the angle of the electronic device 100 in advance or include the RSRP values of the plurality of candidate beams obtained by prior experiments.

Referring to FIG. 3B, the neural networks 111 may be trained to estimate the AoA distribution (or the AoA class) based on training data, such as a row t1, a row t2, ... , and a row tn (not shown). The processor 110 (e.g., in FIG. 2) may collect the training data (e.g., the row t1, the row t2, ... , and the row tn, etc.) to train the neural networks 111.

In one or more embodiments, the row t1 may include the first RSRP pattern training data 311 and the first true AoA 315 (e.g., 0 degree) which is a label value of the first RSRP pattern training data 311. The first RSRP pattern training data 311 may include the RSRP values in a zeroth candidate beam, a first candidate beam, a second candidate beam, a third candidate beam, a fourth candidate beam, a fifth candidate beam, and a sixth candidate beam, which are measured and/or obtained for the first true AoA 315 (e.g., 0 degree). For example, for the first true AoA 315 (e.g., 0 degree), the RSRP value of the zeroth candidate beam may be '-96.81', the RSRP value of the first candidate beam may be '-108.89', the RSRP value of the second candidate beam may be '-108.80', the RSRP value of the third candidate beam may be '-106.64', the RSRP value of the fourth candidate beam may be '-104.97', the RSRP value of the fifth candidate beam may be '-100.73', and the RSRP value of the sixth candidate beam may be '-95.16'.

In one or more embodiments, the row t2 may include the second RSRP pattern training data 321 and the second true AoA 325 (e.g., 5 degrees) which is a label value of the second RSRP pattern training data 321. The second RSRP pattern training data 321 may include the RSRP values in a zeroth candidate beam, a first candidate beam, a second candidate beam, a third candidate beam, a fourth candidate beam, a fifth candidate beam, and a sixth candidate beam, which are measured and/or obtained for the second true AoA 325 (e.g., 5 degrees). For example, for the second true AoA 325 (e.g., 5 degrees), the RSRP value of the zeroth candidate beam may be '-97.36', the RSRP value of the first candidate beam may be '-102.84', the RSRP value of the second candidate beam may be '-106.97', the RSRP value of the third candidate beam may be '-107.85', the RSRP value of the fourth candidate beam may be '-110.35', the RSRP value of the fifth candidate beam may be '-100.27', and the RSRP value of the sixth candidate beam may be '-95.88'.

In FIG. 3B, for convenience of description, the plurality of candidate beams of the electronic device 100 are described as including a total of 7 beams in units of 20 degrees in the spatial domain, but the embodiment is not limited thereto. The plurality of candidate beams according to one or more embodiments may include any other numbers of beams in any other angle units in the spatial domain depending on settings.

In FIG. 3B, for convenience of description, the true AoAs (e.g., the angles in FIG. 3B) are described as being set in units of 5 degrees, but the embodiment is not limited thereto. The true AoAs according to one or more embodiments may be set in any other angle units depending on the characteristics of the wireless communication system and/or channel conditions.

The device and method according to one or more embodiments may estimate the AoA class (or the AoA distribution) covering the spatial domain (or the physical region) that is relatively more finely divided than the plurality of candidate beams of the electronic device 100 based on the above-described RSRP pattern training data and the true AoA labeled therewith and perform precise beam alignment based on the estimated high-resolution AoA class (or the AoA distribution), thereby improving the performance and/or quality of wireless communication.

FIG. 3C is a diagram illustrating an example of a result of training the neural networks 111 according to one or more embodiments.

In detail, FIG. 3C shows the RSRP pattern data (e.g., first RSRP pattern data 351 and second RSRP pattern data 361) and the AoA classes corresponding to the RSRP pattern data estimated by the neural networks 111 (e.g., a first AoA class 355 and a second AoA class 365), as an example of a training result of the neural networks 111 in FIG. 3A. The neural networks 111 according to one or more embodiments may estimate the AoA distribution or the AoA class corresponding to the RSRP pattern data. In FIG. 3C, for convenience of description, the neural networks 111 are described as being trained to estimate the AoA class.

In FIG. 3C, it is assumed that the plurality of candidate beams of the electronic device 100 may include a zeroth candidate beam corresponding to a -60 degree region in the spatial domain, a first candidate beam corresponding to a -40 degree region in the spatial domain, a second candidate beam corresponding to a -20 degree region in the spatial domain, a third candidate beam corresponding to a 0 degree region in the spatial domain, a fourth candidate beam corresponding to a 20 degree region in the spatial domain, a fifth candidate beam corresponding to a 40 degree region in the spatial domain, and a sixth candidate beam corresponding to a 60 degree region in the spatial domain. Also, in FIG. 3C, it is assumed that the AoA class estimated by the neural networks 111 includes the AoA classes set in units of 5 degree angle. Here, the RSRP pattern data may include the RSRP values measured in the plurality of candidate beams of the electronic device 100 with respect to signals received from the external device.

Referring to FIG. 3C, the neural networks 111 may estimate the AoA class (or the AoA distribution) based on the RSRP pattern data, such as those included in a row T1, a row T2, ... , and a row Tn (not shown). The processor 110 may generate RSRP pattern data based on the RSRP value measured in each of the plurality of candidate beams with respect to the signal received from the external device (e.g., the base station) and may then transmit (or input) the RSRP pattern data to the neural networks 111.

In one or more embodiments, the neural networks 111 may use the deep-learning algorithm (or the deep-learning model) trained in FIG. 3B in response to an input of the first RSRP pattern data 351 and may estimate the AoA class corresponding to the first RSRP pattern data 351 (included in row T1). The row T1 may include the first RSRP pattern data 351 and the first AoA class 355 (e.g., 50 degrees) estimated as corresponding to the first RSRP pattern data 351 by the neural networks 111. Here, the first RSRP pattern data 351 may include the RSRP values in a zeroth candidate beam, a first candidate beam, a second candidate beam, a third candidate beam, a fourth candidate beam, a fifth candidate beam, and a sixth candidate beam in the electronic device 100. For example, in the first RSRP pattern data 351, the RSRP value of the zeroth candidate beam may be '-114.81', the RSRP value of the first candidate beam may be '-93.88', the RSRP value of the second candidate beam may be '-90.49', the RSRP value of the third candidate beam may be '-99.22', the RSRP value of the fourth candidate beam may be '-101.16', the RSRP value of the fifth candidate beam may be '-101.89', and the RSRP value of the sixth candidate beam may be '-96.99'. The neural networks 111 may estimate (or output) the first AoA class 355 (e.g., 50 degrees) as the AoA class corresponding to the first RSRP pattern data 351 described above.

In one or more embodiments, the neural networks 111 may use the deep-learning algorithm (or the deep-learning model) trained in FIG. 3B in response to an input of the second RSRP pattern data 361 and may estimate the AoA class corresponding to the second RSRP pattern data 361 (included in row T2). The row T2 may include the second RSRP pattern data 361 and the second AoA class 365 (e.g., 75 degrees) estimated as corresponding to the second RSRP pattern data 361 by the neural networks 111. Here, the second RSRP pattern data 361 may include the RSRP values in a zeroth candidate beam, a first candidate beam, a second candidate beam, a third candidate beam, a fourth candidate beam, a fifth candidate beam, and a sixth candidate beam in the electronic device 100. For example, in the second RSRP pattern data 361, the RSRP value of the zeroth candidate beam may be '-100.07', the RSRP value of the first candidate beam may be '-107.60', the RSRP value of the second candidate beam may be '-102.50', the RSRP value of the third candidate beam may be '-104.92', the RSRP value of the fourth candidate beam may be '-100.06', the RSRP value of the fifth candidate beam may be '-98.10', and the RSRP value of the sixth candidate beam may be '-100.55'. The neural networks 111 may estimate (or output) the second AoA class 365 (e.g., 75 degrees) as the AoA class corresponding to the second RSRP pattern data 361 described above.

In FIG. 3C, for convenience of description, the plurality of candidate beams of the electronic device 100 are described as including a total of 7 beams in units of 20 degrees in the spatial domain, but the embodiment is not limited thereto. The plurality of candidate beams according to one or more embodiments may include any other numbers of beams in any other angle units in the spatial domain depending on settings.

In FIG. 3C, for convenience of description, the neural networks 111 are described as estimating the AoA class in response to an input of the RSRP pattern data, but the embodiment is not limited thereto. The neural networks 111 according to one or more embodiments may estimate the AoA distribution in response to an input of the RSRP pattern data in the same or similar manner as the method described above with reference to FIGS. 3A to 3C.

In FIG. 3C, the estimated AoA classes (e.g., the angles in FIG. 3C) are described as being set in units of 5 degrees, but the embodiment is not limited thereto. The estimated AoA classes according to one or more embodiments may be set in any other angle units (e.g., 1 degree, 2 degrees, ... , etc.) depending on the characteristics of the wireless communication system and/or channel conditions.

According to embodiments, provided are a device and method of operating the device. The device may minimize the overhead of beam training by using the neural networks 111 trained based on the above-described RSRP pattern training data and the true AoA labeled therewith and may perform precise beam alignment by estimating the high-resolution AoA class (or the AoA distribution). In FIGS. 4A to 7, one or more embodiments of the beam management based on the AoA class (or the AoA distribution) estimated by the neural networks 111 is described below.

FIG. 4A is a diagram illustrating an example of an operation of beam management of the electronic device 100 according to one or more example embodiments.

Referring to FIG. 4A, the electronic device 100 may perform the beam management using a dominant AoA class based on the AoA distribution estimated by the neural networks 111 of the processor 110 (e.g., in FIG. 2). When describing FIG. 4A, repeated descriptions as those given with reference to FIGS. 1 to 3C may be omitted in view of the descriptions above with reference to FIGS. 1 to 3C.

In FIG. 4A, RSRP pattern data may refer to data including an RSRP value measured in each of a plurality of candidate beams of the electronic device 100 with respect to a signal received from the external device (e.g., the base station).

In one or more embodiments, the processor 110 (e.g., in FIG. 2) of the electronic device 100 may perform beam training based on all beams or some beams in a predefined low-resolution beam codebook (e.g., see 410 in FIG. 4B) and may generate the RSRP pattern data. The processor 110 (FIG. 2) may transmit or input the generated RSRP pattern data to the neural networks 111.

In one or more embodiments, in response to an input of the RSRP pattern data, the neural networks 111 of the processor 110 (e.g., in FIG. 2) may output a dominant AoA class corresponding to the RSRP pattern data via the deep-learning algorithm (or the deep-learning model) trained in FIG. 3A. For example, the neural networks 111 of the processor 110 (FIG. 2) may estimate the AoA distribution by applying the input RSRP pattern data to the deep-learning algorithm (or the deep-learning model) trained in FIG. 3A and may output, as the dominant AoA class, the AoA class having the highest matching probability in the estimated AoA distribution. Here, if there is one AoA class having a significantly high matching probability (e.g., a difference between two highest matching probabilities being a threshold or greater) in the estimated AoA distribution, this one AoA class may refer to the dominant AoA class. For example, if there are at least two AoA classes having matching probabilities higher than a threshold in the estimated AoA distribution, the processor 110 (FIG. 2) may perform beam management according to one or more embodiments of FIGS. 5A to 5C and FIG. 6. The AoA distribution may include distribution of matching probabilities between the RSRP pattern training data and each of AoA classes, as probability distribution for each AoA class estimated by the neural networks 111 (e.g., the sum of the matching probabilities of all AoA classes may be '1').

In one or more embodiments, the processor 110 (e.g., FIG. 2) may control the communication interface 120 (FIG. 2) to select the beam corresponding to the dominant AoA class in the high-resolution beam codebook (e.g., 420 in FIG. 4B) as a target beam and may perform the wireless communication between an external device (e.g., a base station) and the electronic device 100 using the target beam.

FIG. 4B is a diagram illustrating an example of an operation of the beam management of the electronic device 100 according to one or more example embodiments.

In detail, FIG. 4B shows an example of a low-resolution beam set 410 of the low-resolution beam codebook of FIG. 4A and an example of a high-resolution beam set 450 of the high-resolution beam codebook of FIG. 4A.

Referring to FIG. 4B, the low-resolution beam set 410 refers to beams belonging to the low-resolution beam codebook, as the plurality of candidate beams used by the electronic device 100 when generating the RSRP pattern data input to the neural networks 111. For example, the processor 110 (e.g., FIG. 2) of the electronic device 100 may generate the RSRP pattern data using all beams or some beams in a predefined low-resolution beam codebook. The low-resolution beam set 410 may have a wider spacing between beams than the high-resolution beam set 450 and a greater beam width than the high-resolution beam set 450. For example, the low-resolution beam set 410 may include a first candidate beam 411-1, a second candidate beam 411-2, ... , an m-th candidate beam 411-m, as a plurality of candidate beams of the electronic device 100.

The high-resolution beam set 450 may refer to beams belonging to the high-resolution beam codebook, as the beam corresponding to each of the AoA classes of the AoA distribution output from the neural networks 111. The high-resolution beam set 450 may have a narrower spacing between beams than the low-resolution beam set 410 and a less beam width (more fine) than the low-resolution beam set 410. For example, the high-resolution beam set 450 may include a first beam 451-1, a second beam 451-2, ... , and an n-th candidate beam 451-n.

Referring to FIG. 4A, the processor 110 (e.g., FIG. 2) may select the beam corresponding to the dominant AoA class in the high-resolution beam set 450 as the target beam and may control the antenna array of the communication interface 120 so that wireless communication is performed based on the target beam.

An electronic device and a method of operating the electronic device according to one or more embodiments may minimize the overhead of the beam training by performing the beam training based on the low-resolution beam set 410 and may perform the wireless communication based on the AoA class that is estimated based on the high-resolution beam set 450. Accordingly, a precise beam alignment may be performed and the wireless communication quality may be improved.

FIG. 5A is a diagram illustrating an example of an operation of beam management of the electronic device 100 according to one or more example embodiments.

Referring to FIG. 5A, the electronic device 100 may perform the beam management using a candidate AoA class based on the AoA distribution estimated by the neural networks 111 of the processor 110 (e.g., FIG. 2). When describing FIG. 5A, repeated descriptions as those given with reference to FIGS. 1 to 4B may be omitted in view of the descriptions above with reference to FIGS. 1 to 4B.

In FIG. 5A, RSRP pattern data may refer to data including an RSRP value measured in each of a plurality of candidate beams of the electronic device 100 with respect to a signal received from the external device (e.g., the base station).

In one or more embodiments, the processor 110 (e.g., FIG. 2) of the electronic device 100 may perform beam training based on all beams or some beams in a predefined low-resolution beam codebook (e.g., see 410 in FIG. 4B) and may generate the RSRP pattern data. The processor 110 (FIG. 2) may transmit or input the generated RSRP pattern data to the neural networks 111.

In one or more embodiments, in response to an input of the RSRP pattern data, the neural networks 111 of the processor 110 (e.g., FIG. 2) may output AoA distribution corresponding to the RSRP pattern data via the deep-learning algorithm (or the deep-learning model) trained in FIG. 3A. For example, the neural networks 111 of the processor 110 (FIG. 2) may apply the input RSRP pattern data to the deep-learning algorithm (or the deep-learning model) trained in FIG. 3A and may output the estimated AoA distribution. For example, the neural networks 111 may output the AoA distribution when there are at least two AoA classes having matching probabilities greater than or equal to a threshold in the estimated AoA distribution (e.g., when there is no dominant AoA class of FIG. 4A in the estimated AoA distribution). The AoA distribution may include distribution of matching probabilities between the RSRP pattern training data and each of AoA classes, as probability distribution for each AoA class estimated by the neural networks 111 (e.g., the sum of the matching probabilities of all AoA classes may be ’1’).

In one or more embodiments, the processor 110 (e.g., FIG. 2) may select, as candidate AoA classes, AoA classes having matching probabilities greater than or equal to a threshold in the AoA distribution and perform beam training on the beams corresponding to the candidate AoA classes (e.g., see FIG. 6). The number of candidate AoA classes may be determined according to a predetermined threshold in the AoA distribution. The operation of beam training will be described below with reference to FIG. 6. The processor 110 (FIG. 2) may select the target beam based on the results of the beam training.

In one or more embodiments, the processor 110 (e.g., FIG. 2) may select, as the candidate AoA classes, the AoA classes having matching probabilities greater than or equal to a predetermined threshold in the AoA distribution and may select, as the target beam, a beam generated by combining beams corresponding to the candidate AoA classes. The number of candidate AoA classes may be determined according to a predetermined threshold in the AoA distribution.

In one or more embodiments, the processor 110 (e.g., FIG. 2) may perform wireless communication with an external device (e.g., a base station) using the selected target beam.

FIG. 5B is a diagram illustrating an example of an operation of the beam management of the electronic device 100 according to one or more example embodiments.

In detail, FIG. 5B shows a case in which the AoA distribution of FIG. 5A includes two candidate AoA classes. In FIG. 5B, there are a total of two AoA classes having matching probabilities greater than or equal to the threshold in the AoA distribution, including a first candidate AoA class and a second candidate AoA class, and it is assumed that beam gains having the same value are assigned to a beam 511 corresponding to the first candidate AoA class and a beam 513 corresponding to the second candidate AoA class.

Referring to FIG. 5B, in one or more embodiments, the processor 110 (e.g., FIG. 2) may select the first candidate AoA class and the second candidate AoA class, of which matching probabilities with the input RSRP pattern data are greater than or equal to the threshold in the AoA distribution output from the neural networks 111, select the beam 511 corresponding to the first candidate AoA class and the beam 513 corresponding to the second candidate AoA class in the high-resolution beam codebook, and perform the beam training on the selected beams. One or more embodiments of the beam training is described below with reference to FIG. 6. The processor 110 (FIG. 2) may select the target beam for performing wireless communication with an external device (e.g., a base station) based on the results of beam training.

In one or more embodiments, the processor 110 (e.g., FIG. 2) may select the first candidate AoA class and the second candidate AoA class, of which matching probabilities with the input RSRP pattern data are greater than or equal to the threshold in the AoA distribution output from the neural networks 111, and may set, as the target beam, the beam formed by combining together the beam 511 corresponding to the first candidate AoA class and the beam 513 corresponding to the second candidate AoA class in the high-resolution beam codebook.

In FIG. 5B, the beam gain of the beam 511 corresponding to the first candidate AoA class and the beam gain of the beam 513 corresponding to the second candidate AoA class having the same value are described as being assigned, but example embodiments are not limited thereto. The beam gain of the beam 511 corresponding to the first candidate AoA class and the beam gain of the beam 513 corresponding to the second candidate AoA class according to one or more embodiments may be differentially assigned (e.g., to have different values) according to an orientation of each of the AoAs (e.g., the orientation corresponding to each of the AoA classes) depending on the matching probability of the AoA class corresponding to each of the beams in the AoA distribution.

FIG. 5C is a diagram illustrating an example of an operation of the beam management of the electronic device 100 according to one or more embodiments.

In detail, FIG. 5C shows a case in which the AoA distribution of FIG. 5A includes three candidate AoA classes. In FIG. 5C, there are a total of three AoA classes having matching probabilities greater than or equal to the threshold in the AoA distribution, including a first candidate AoA class, a second candidate AoA class, and a third candidate AoA class and, it is assumed that beam gains having the same value are assigned to a beam 521 corresponding to the first candidate AoA class, a beam 522 corresponding to the second candidate AoA class, and a beam 523 corresponding to the third candidate AoA class.

Referring to FIG. 5C, in one or more embodiments, the processor 110 (e.g., FIG. 2) may select the first candidate AoA class, the second candidate AoA class, and the third candidate AoA class, of which matching probabilities with the input RSRP pattern data are greater than or equal to the threshold in the AoA distribution output from the neural networks 111, select the beam 521 corresponding to the first candidate AoA class, the beam 522 corresponding to the second candidate AoA class, the beam 523 corresponding to the third candidate AoA class in the high-resolution beam codebook, and perform the beam training on the selected beams. One or more embodiments of the beam training will be described below with reference to FIG. 6. The processor 110 (FIG. 2) may select the target beam for performing wireless communication with an external device (e.g., a base station) based on the results of beam training.

In one or more embodiments, the processor 110 (e.g., FIG. 2) may select the first candidate AoA class, the second candidate AoA class, and the third candidate AoA class, of which matching probabilities with the input RSRP pattern data are greater than or equal to the threshold in the AoA distribution output from the neural networks 111 and may set, as the target beam, a beam formed by combining together the beam 521 corresponding to the first candidate AoA class, the beam 522 corresponding to the second candidate AoA class, and the beam 523 corresponding to the third candidate AoA class in the high-resolution beam codebook.

In FIG. 5C, the beam gain of the beam 521 corresponding to the first candidate AoA class, the beam gain of the beam 522 corresponding to the second candidate AoA class, and the beam gain of the beam 523 corresponding to the third candidate AoA class having the same value are described as being assigned, but example embodiments are not limited thereto. The beam gain of the beam 521 corresponding to the first candidate AoA class, the beam gain of the beam 522 corresponding to the second candidate AoA class, and the beam gain of the beam 523 corresponding to the third candidate AoA class according to one or more embodiments may be differentially assigned (e.g., to have different values) in the orientation of each of the AoAs (e.g., the orientation corresponding to the AoA class) depending on the matching probability of the AoA class corresponding to each of the beams in the AoA distribution.

FIG. 6 is a diagram illustrating an example of an operation of beam management of an electronic device according to one or more example embodiments.

FIG. 6 may be a diagram illustrating one or more embodiments of an beam training operation of the electronic device 100 of FIGS. 5A to 5C. The embodiment of beam training of the electronic device 100 in FIG. 6 may also be applied to descriptions related to beam training in the diagrams other than FIGS. 5A to 5C described above. When describing FIG. 6, repeated descriptions as those given with reference to FIGS. 1 to 5C may be omitted in view of the descriptions above with reference to FIGS. 1 to 5C.

In FIG. 6, it is assumed that beams (high-resolution) corresponding to candidate AoA classes (e.g., a candidate AoA #0, a candidate AoA #1, ... , and a candidate AoA #K-1) belong to a zeroth candidate beam (low-resolution) among the plurality of candidate beams of the electronic device 100 in the spatial domain. For example, when a cover region of the zeroth candidate beam in the spatial domain includes a first angle region (e.g., 0 degree to 20 degrees (low-resolution)), the cover region of the beam corresponding to the candidate AoA #0 may include a partial region (e.g., 5 degrees (high-resolution)) of a first angle region.

Referring to FIG. 6, the processor (e.g., 110 in FIG. 2) of the electronic device 100 may select a total of K candidate AoA classes having probabilities greater than or equal to a threshold based on the AoA distribution output from the neural networks 111 and may perform beam training on the selected candidate AoA classes (total K number of AoA classes).

In one or more embodiments, the processor 110 (e.g., FIG. 2) may measure at least one channel indicator for channels based on beams corresponding to the candidate AoA classes (e.g., the candidate AoA #0, the candidate AoA #1, ... , and the candidate AoA #K-1). Each of the candidate AoA classes (e.g., the candidate AoA #0, the candidate AoA #1, ... , and the candidate AoA #K-1) may perform beam alignment with a beam (e.g., gNB beam) of an external device (e.g., a base station). Here, as beams belonging to the high-resolution beam codebook (e.g., 450 in FIG. 4B), the beams corresponding to the candidate AoA classes (e.g., the candidate AoA #0, the candidate AoA #1, ... , and the candidate AoA #K-1) may perform beam alignment with an external device more precisely than the plurality of candidate beams (e.g., 410 in FIG. 4B) of the electronic device 100. The processor 110 (FIG. 2) may perform beam training for each of the beams corresponding to the candidate AoA classes (e.g., the candidate AoA #0, the candidate AoA #1, ... , and the candidate AoA #K-1). For example, the processor 110 (FIG. 2) may perform first beam training 600-1 between the beam (e.g., gNB beam) of the external device (e.g., the base station) and the beam corresponding to the candidate AoA #0, second beam training 600-2 between the beam (e.g. gNB beam) of the external device (e.g., the base station) and the beam corresponding to the candidate AoA #1, ... , and Kth beam training 600-k between the beam (e.g. gNB beam) of the external device (e.g., the base station) and the beam corresponding to the candidate AoA #K-1. The processor 110 (FIG. 2) may measure at least one channel indicator that indicates a channel status between the beam (e.g., gNB beam) of the external device (e.g., the base station) and the beams corresponding to the candidate AoA classes (e.g., the candidate AoA #0, the candidate AoA #1, ... , and the candidate AoA #K-1). The at least one channel indicator may include, for example, at least one of an RSRP, a signal-to-noise ratio (SNR), and a reference signal received quality (RSRQ) of signals respectively passing through the channels.

In one or more embodiments, the processor 110 (e.g., FIG. 2) may select the target beam from the beams corresponding to the candidate AoA classes (e.g., the candidate AoA #0, the candidate AoA #1, ... , and the candidate AoA #K-1) based on the comparison results of channel indicators based on the beams corresponding to the candidate AoA classes

(e.g., the candidate AoA #0, the candidate AoA #1, ... , and the candidate AoA #K-1). For example, the processor 110 (e.g., FIG. 2) may select the target beam based on a beam that corresponds to a channel indicator that has a superior quality compared with other channel indicators. The processor 110 (FIG. 2) may perform wireless communication with the external device (e.g., the base station) using the selected target beam.

FIG. 7 is a diagram illustrating an example of an operation of beam management of an electronic device according to one or more example embodiments.

FIG. 7 may be a diagram illustrating a beam management operation for correcting a target beam based on the dominant AoA class using the processor 110 (e.g., FIG. 2) when the location of the electronic device 100 or the orientation of the electronic device 100 changes. When describing FIG. 7, repeated descriptions as those given with reference to FIGS. 1 to 6 may be omitted in view of the descriptions above with reference to FIGS. 1 to 6.

It is assumed that axes of spatial coordinates in FIG. 7 (e.g., an X-axis (horizontal axis), a Y-axis (vertical axis), and a Z-axis (height axis)) are reference axes for representing a location of the electronic device 100 before change, and an origin 710 represents a location of the electronic device 100 before change. In addition, it is assumed that the axes of spatial coordinates in FIG. 7 (e.g., an X1 axis, a Y1 axis, and a Z1 axis) are reference axes for representing an amount of change in a corresponding orientation after change of the location of the electronic device 100.

Referring to FIG. 7, the processor 110 (e.g., FIG. 2) of the electronic device 100 may detect a change in the orientation of the electronic device 100 (or a change in the location of the electronic device 100) based on sensing data sensed from at least one sensor in the electronic device 100 (e.g., accelerometers, gyroscopes, and magnetometers). For example, in (a) of FIG. 7, by at least one sensor of the electronic device 100, the amount of change in the orientation of the electronic device 100 in the X-axis and Y-axis may be sensed as '$\alpha$ degrees' counterclockwise about the Z-axis (Z=Z1, which means no change with respect to the Z axis). In (b) of FIG. 7, by the sensor of the electronic device 100, the amount of change in the orientation of the electronic device 100 in the Z-axis and X-axis may be sensed as '$\beta$ degrees' counter-clockwise about the Y-axis (Y=Y2, which means no change with respect to the Y axis). In (c) of FIG. 7, by the sensor of the electronic device 100, the amount of change in the orientation of the electronic device 100 in the Y-axis and Z-axis may be sensed as '$\gamma$ degrees' counterclockwise about the X-axis (X=X3, which means no change with respect to the X axis).

In one or more embodiments, the processor 110 (e.g., FIG. 2) may calculate the location coordinates (e.g., $\begin{bmatrix} x \\ y \\ z \end{bmatrix}$) of the electronic device 100 before change based on the sensor information. For example, the processor may calculate $\begin{bmatrix} x \\ y \\ z \end{bmatrix}$, which represents the location coordinates of the electronic device 100 before change, based on Equation 1 below.

[Equation 1]

$$\begin{bmatrix} x \\ y \\ z \end{bmatrix} = \begin{bmatrix} sin\theta cos\phi \\ sin\theta sin\phi \\ cos\theta \end{bmatrix}$$

Here, *x* represents the location coordinates of the electronic device 100 before change on the X-axis, *y* represents the location coordinates of the electronic device 100 before change on the Y-axis, and *z* represents the location coordinates of the electronic device 100 before change on the Z-axis. $\theta$ represents an azimuth angle of the dominant AoA class and $\phi$ represents an elevation angle of the dominant AoA class. Equation 1 re-expresses the azimuth angle ($\theta$) and elevation angle ($\phi$) of the dominant AoA class on the X, Y, and Z axes.

In one or more embodiments, the processor 110 (e.g., FIG. 2) may calculate the location coordinates (e.g., $\begin{bmatrix} x' \\ y' \\ z' \end{bmatrix}$) after the electronic device 100 is changed, based on the sensing data (e.g., $\alpha$, $\beta$, $\gamma$). For example, the processor may calculate $\begin{bmatrix} x' \\ y' \\ z' \end{bmatrix}$, which represents the location coordinates of the electronic device 100 after change, based on Equation 2 below.

[Equation 2]

$$\begin{bmatrix} x' \\ y' \\ z' \end{bmatrix} = \begin{bmatrix} 1 & 0 & 0 \\ 0 & cos\gamma & sin\gamma \\ 0 & -sin\gamma & cos\gamma \end{bmatrix} \begin{bmatrix} cos\beta & 0 & -sin\beta \\ 0 & 1 & 0 \\ sin\beta & 0 & cos\beta \end{bmatrix} \begin{bmatrix} cos\alpha & sin\alpha & 0 \\ -sin\alpha & cos\alpha & 0 \\ 0 & 0 & 1 \end{bmatrix} \begin{bmatrix} x \\ y \\ z \end{bmatrix}$$

Here, *x'* represents the location coordinates of the electronic device 100 after change on the X-axis, *y'* represents the location coordinates of the electronic device 100 after change on the Y-axis, and *z'* represents the location coordinates of the electronic device 100 after change on the Z-axis. $\alpha$ represents an amount of change in the orientation (Z=Z1) of the electronic device 100 in the X-axis and Y-axis, $\beta$ represents an amount of change in the orientation (Y=Y2) of the electronic device 100 in the Z-axis and X-axis, and $\gamma$ represents an amount of change in the orientation (X=X3) of the electronic device 100 in the Y-axis and Z-axis.

In one or more embodiments, the processor 110 (e.g., FIG. 2) may select, as the final target beam, the beam corresponding to the location coordinates (e.g., $\begin{bmatrix} x' \\ y' \\ z' \end{bmatrix}$) of the electronic device 100 after change. For example, the processor 110 (FIG. 2) may generate correction information about the current target beam based on the location coordinates of the electronic device 100 before change (e.g., $\begin{bmatrix} x \\ y \\ z \end{bmatrix}$) and the location coordinates of the electronic device 100 after change (e.g., $\begin{bmatrix} x' \\ y' \\ z' \end{bmatrix}$) and may correct the current target beam based on of the correction information. The processor 110 (FIG. 2) may select the corrected target beam as the final target beam and perform wireless communication with an external device (e.g., a base station).

FIG. 8 is a flowchart showing a method of operating an electronic device 100, according to one or more example embodiments.

Referring to FIG. 8, a beam management method using an AoA distribution (or an AoA class) estimated based on neural networks 111 of the electronic device 100 may include operations S100 to S120. When describing FIG. 8, repeated descriptions as those given with reference to FIGS. 1 to 7 may be omitted in view of the descriptions above with reference to FIGS. 1 to 7. The electronic device 100 and the neural networks 111 of FIG. 8 correspond to the electronic device 100 and the neural networks 111 of FIGS. 1 to 7, respectively.

In operation S100, the electronic device 100 may generate RSRP pattern data based on RSRP measured in each of a plurality of beams with respect to a signal received from an external device. Here, the RSRP pattern data may refer to data including an RSRP value measured in each of a plurality of candidate beams of the electronic device 100 with respect to the signal received from the external device (e.g., the base station).

In operation S110, the electronic device 100 may estimate the AoA distribution (or the AoA class) for the RSRP pattern data by applying the RSRP pattern data to the neural networks 111 based on the deep-learning algorithm. The neural networks 111 may be trained to estimate the AoA distribution (or the AoA class) corresponding to the RSRP pattern training data for the plurality of candidate beams via the deep-learning algorithm, using the RSRP pattern training data as input data. The RSRP pattern training data may refer to the RSRP pattern data for the plurality of candidate beams, which is measured in advance or obtained experimentally in order to train the neural networks 111. The AoA distribution may include distribution of matching probabilities between the RSRP pattern training data and each of AoA classes, as probability distribution for each AoA class estimated by the neural networks 111.

In operation S120, the electronic device 100 may perform the beam management based on the estimated AoA distribution. An operation method of performing the beam management of the electronic device 100 is described below with reference to FIGS. 9 and 10.

FIG. 9 is a flowchart showing a method of operating the electronic device 100, according to one or more example embodiments.

FIG. 9 relates to operations after operation S120 of FIG. 8. The beam management method using the AoA distribution (or the AoA class) estimated based on the neural networks 111 of the electronic device 100 may include operations S210 to S260. When describing FIG. 9, repeated descriptions as those given with reference to FIGS. 1 to 8 may be omitted in view of the descriptions above with reference to FIGS. 1 to 8. The electronic device 100 and the neural networks 111 of FIG. 9 correspond to the electronic device 100 and the neural networks 111 of FIGS. 1 to 8, respectively.

In operation S210, the electronic device 100 may identify whether a dominant AoA class exists. Here, the dominant AoA class may refer to one AoA class having a significantly high matching probability (e.g., the matching probability with the RSRP pattern data (input)) among the AoA classes in the AoA distribution estimated by the neural networks 111. The electronic device 100 may perform operation S220 when the dominant AoA class exists and may perform operation S230 when the dominant AoA class does not exist.

In operation S220, the electronic device 100 may select the beam corresponding to the dominant AoA class as the target beam. For example, when the dominant AoA class exists, the electronic device 100 may select, as the target beam, the beam corresponding to the dominant AoA class among the beams in a high-resolution beam codebook.

In operation S230, the electronic device 100 may select at least two candidate AoA classes. For example, when there are at least two AoA classes having matching probabilities greater than or equal to the threshold in the AoA distribution estimated by the neural networks 111 (e.g., when there is no dominant AoA class), the electronic device 100 may perform the beam management based on at least two candidate AoA classes (e.g., see FIGS. 5A to 5C and 6). The candidate AoA classes may refer to the AoA classes having probabilities greater than or equal to a predetermined threshold in the AoA distribution estimated by the neural networks 111.

In operation S240, the electronic device 100 may perform the beam training based on the beams corresponding to the candidate AoA class. For example, the electronic device 100 may select beams corresponding to the candidate AoA classes among the beams in the high-resolution beam codebook and may measure at least one channel indicator for channels based on the beams corresponding to the candidate AoA classes. The at least one channel indicator may include at least one of an RSRP, an SNR, and an RSRQ of signals passing through the channels.

In operation S250, the electronic device 100 may select the target beam based on results of the beam training. For example, the electronic device 100 may select the target beam based on at least one channel indicator for channels (e.g., comparison between channel indicators) respectively corresponding to the beams corresponding to the candidate AoA classes.

Although not shown, the electronic device 100 may select, as the target beam, the beam generated by combining the beams corresponding to the candidate AoA classes together.

In operation S260, the electronic device 100 may perform wireless communication between the external device and the electronic device 100 using the target beam.

FIG. 10 is a flowchart showing a method of operating the electronic device 100, according to one or more example embodiments.

FIG. 10 relates to operations after operation S260 of FIG. 9. The beam management method using the AoA distribution (or the AoA class) estimated based on the neural networks 111 of the electronic device 100 may include operations S310 to S350. When describing FIG. 10, repeated descriptions as those given with reference to FIGS. 1 to 9 may be omitted in view of the descriptions above with reference to FIGS. 1 to 9. The electronic device 100 and the neural networks 111 of FIG. 10 may correspond to the electronic device 100 and the neural networks 111 of FIGS. 1 to 9, respectively.

In operation S310, the electronic device 100 may identify whether the location of the electronic device 100 (or the orientation of the electronic device 100) changes. For example, the electronic device 100 may detect a change in the location of the electronic device 100 or a change in the orientation of the electronic device 100 based on the sensing data from at least one sensor (e.g., accelerometers, gyroscopes, magnetometers) in the electronic device 100.

In operation S320, the electronic device 100 may calculate the location coordinates of the electronic device 100 before change based on the sensor information (e.g., see FIG. 7). The AoA class information corresponding to the existing target beam may refer to dominant AoA class information at the location coordinates of the electronic device 100 before change. For example, the electronic device 100 may calculate the location coordinates of the electronic device 100 before change (e.g., $\begin{bmatrix} x \\ y \\ z \end{bmatrix}$ in FIG. 7) based on the sensor information, using [Equation 1] in FIG. 7.

In operation S330, the electronic device 100 may calculate the location coordinates of the electronic device 100 after the change from the location coordinates of the electronic device 100 before the change (e.g., see FIG. 7) based on the sensing data (e.g., $\alpha$, $\beta$, and $\gamma$ in FIG. 7). For example, the electronic device 100 may calculate the location coordinates (e.g., $\begin{bmatrix} x' \\ y' \\ z' \end{bmatrix}$ in FIG. 7) of the electronic device 100 after change based on the location coordinates (e.g., $\begin{bmatrix} x \\ y \\ z \end{bmatrix}$ in FIG. 7) of the electronic device 100 before change using [Equation 2] in FIG. 7.

In operation S340, the electronic device 100 may generate correction information about an existing target beam (e.g., the target beam at the location coordinates of the electronic device 100 before change) based on the location coordinates of the electronic device 100 before the change and the location coordinates of the electronic device 100 after the change.

In operation S350, the electronic device 100 may select, as the final target beam, the beam generated by correcting the existing target beam based on the correction information. For example, the electronic device 100 may correct the existing target beam based on the correction information and select the corrected target beam as the final target beam. The electronic device 100 may perform wireless communication with the external device (e.g., a base station) based on the final target beam.

FIG. 11 is a schematic block diagram showing a wireless communication system 1100 according to one or more example embodiments.

An electronic device 1101 of FIG. 11 may correspond to the electronic device 100 of FIGS. 1 to 10, a processor 1120 of FIG. 11 may correspond to the processor 110 of FIGS. 1 to 10, a memory 1130 of FIG. 11 may correspond to the memory 140 of FIG. 2, a sensor module 1176 of FIG. 11 may correspond to the sensor 130 of FIG. 2, and a communication module 1190 of FIG. 11 may correspond to the communication interface 120 of FIG. 2.

Referring to FIG. 11, in the wireless communication system 1100, the electronic device 1101 may communicate with another electronic device 1102 via a first network 1198 (e.g., a short-distance wireless communication network, etc.) or communicate with another electronic device 1104 and/or server 1108 via a second network 1199 (e.g., a long-distance wireless communication network, etc.). The electronic device 1101 may communicate with another electronic device 1104 via the server 1108. The electronic device 1101 may include the processor 1120, the memory 1130, an input device 1150, an audio output device 1155, a display device 1160, an audio module 1170, the sensor module 1176, an interface 1177, a haptic module 1179, a camera module 1180, a power management module 1188, a battery 1189, a communication module 1190, a subscriber identification module 1196, and/or an antenna module 1197. In the electronic device 1101, some of these components (e.g., such as the display device 1160) may be omitted or other components may be added. Some of these components may be provided as a single integrated circuit. For example, the sensor module 1176 (a fingerprint sensor, an iris sensor, an illuminance sensor, etc.) may be provided by being embedded in the display device 1160 (e.g., a display, etc.).

The processor 1120 may execute software (e.g., a program 1140, etc.) to control one or a plurality of other components (e.g., hardware, software components, etc.) of the electronic device 1101 connected to the processor 1120 and may perform various data processing or calculations. As part of data processing or calculations, the processor 1120 may load commands and/or data received from other components (e.g., the sensor module 1176, the communication module 1190, etc.) into a volatile memory 1132, process the commands and/or data stored in the volatile memory 1132, and store the resulting data in a non-volatile memory 1134. The processor 1120 may include a main processor 1121 (e.g., a central processing unit, an application processor, etc.) and an auxiliary processor 1123 (e.g., a graphics processing unit, an image signal processor, a sensor hub processor, a communication processor, etc.) capable of operating independently or together with the main processor 1121. The auxiliary processor 1123 may use less power than the main processor 1121 and perform specialized functions.

The auxiliary processor 1123 may control functions and/or states related to some of the components of the electronic device 1101 (e.g., the display device 1160, the sensor module 1176, the communication module 1190, etc.) on behalf of the main processor 1121 while the main processor 1121 is in an inactive state (e.g., a sleep state) or together with the main processor 1121 while the main processor 1121 is in an active state (e.g., an application execution state). The auxiliary processor 1123 (e.g., an image signal processor, a communication processor, etc.) may also be provided as part of other functionally related components (e.g., the camera module 1180, the communication module 1190, etc.).

In one or more embodiments, the processor 1120 may estimate an AoA distribution (or an AoA class) corresponding to the RSRP pattern data by applying the RSRP pattern data measured from the plurality of beams of the electronic device 1101 to the neural networks of the processor 1120, with respect to the signal received from an external device (e.g., a base station) to the processor 1120.

In one or more embodiments, the processor 1120 may perform various beam management based on the estimated AoA distribution (or the AoA class). For example, the processor 1120 may select the beam corresponding to the dominant AoA class in the estimated AoA distribution as the target beam and may perform wireless communication with the external device (e.g., the base station). For example, the processor 1120 may select beams corresponding to at least two candidate AoA classes from the estimated AoA distribution, perform the beam training on the beams corresponding to the candidate AoA classes, select the target beam among the beams corresponding to the candidate AoA classes based on the results of beam training, and perform the wireless communication with the external device (e.g., the base station). For example, when the location/orientation of the electronic device 1101 changes after selecting the target beam, the processor 1120 may correct the existing target beam by using the sensing data of the sensor module 1176 (e.g., the amount of change in the orientation of the electronic device 1101, etc.) and the AoA class information corresponding to the existing target beam (e.g., the dominant AoA class information at the location of the electronic device 1101 before the change) and may perform wireless communication with the external device (e.g., the base station) by selecting the corrected beam as the final target beam.

The memory 1130 may store various pieces of data needed by components (e.g., the processor 1120, the sensor module 1176, etc.) of the electronic device 1101. The data may include, for example, input data and/or output data for software (e.g., such as the program 1140) and commands related thereto. The memory 1130 may include the volatile memory 1132 and/or the non-volatile memory 1134. The non-volatile memory 1132 may include an internal memory 1136 fixedly mounted in the electronic device 1101 and an external memory 1138 detachable from the electronic device 1101.

The program 1140 may be stored as software in the memory 1130 and include an operating system 1142, middleware 1144, and/or an application 1146.

The input device 1150 may receive commands and/or data to be used in components (e.g., the processor 1120, etc.) of the electronic device 1101 from the outside of the electronic device 1101 (e.g., a user, etc.). The input device 1150 may include a microphone, a mouse, a keyboard, and/or a digital pen (e.g., stylus pen, etc.).

The audio output device 1155 may output acoustic signals to the outside of the electronic device 1101. The audio output device 1155 may include a speaker and/or a receiver. The speaker may be used for general purposes, such as multimedia playback or recording playback, and the receiver may be used to receive incoming calls. The receiver may be integrated as part of the speaker or provided as a separate independent device.

The display device 1160 may visually provide information to the outside of the electronic device 1101. The display device 1160 may include a display, a hologram device, or a projector, and a control circuit for controlling the devices. The display device 1160 may include a touch circuitry configured to detect touch and/or a sensor circuitry (e.g., a pressure sensor, etc.) set up to measure the intensity of force generated by the touch.

The audio module 1170 may convert sound into an electric signal or, conversely, convert the electric signal into the sound. The audio module 1170 may obtain sound via the input device 1150 or may output the sound via the audio output device 1155 and/or via a speaker and/or a headphone on another electronic device (e.g., the electronic device 1102, etc.) connected directly or wirelessly to the electronic device 1101.

The sensor module 1176 may detect operating conditions (e.g., power, temperature, etc.) of the electronic device 1101 or external environmental conditions (e.g., state of a user, etc.) and may generate electric signals and/or data values corresponding to the sensed conditions. The sensor module 1176 may include a gesture sensor, a gyro sensor, a barometric pressure sensor, a magnetic sensor, an acceleration sensor, a grip sensor, a proximity sensor, a color sensor, an IR sensor, a biometric sensor, a temperature sensor, a humidity sensor, and/or an illuminance sensor. For example, the sensor module 1176 may sense a change in the location of the electronic device 1101 or a change in the orientation of the electronic device 1101.

The interface 1177 may support one or a plurality of designated protocols that may be used to directly or wirelessly connect the electronic device 1101 to another electronic device (e.g., the electronic device 1102, etc.). The interface 1177 may include a high definition multimedia interface (HDMI), a universal serial bus (USB) interface, a security digital (SD) card interface, and/or an audio interface.

A connection terminal 1178 may include a connector that physically connects the electronic device 1101 to another electronic device (e.g., the electronic device 1102, etc.). The connection terminal 1178 may include an HDMI connector, a USB connector, an SD card connector, and/or an audio connector (e.g., a headphone connector, etc.).

The haptic module 1179 may convert electrical signals into mechanical stimulation (e.g., vibration, movement, etc.) or electrical stimulation that is perceived by a user through tactile or kinesthetic sense. The haptic module 1179 may include a motor, a piezoelectric element, and/or an electrical stimulation device.

The camera module 1180 may capture still images and moving images. The camera module 1180 may include an image acquisition device and further include additional lens assembly image signal processors and/or flashes. The lens assembly of the camera module 1180 may collect light emitted from a subject that is a target of image capture.

The power management module 1188 may manage power supplied to the electronic device 1101. The power management module 1188 may be provided as part of a power management integral circuit (PMIC).

The battery 1189 may supply power to components of the electronic device 1101. The battery 1189 may include a non-rechargeable primary cell, a rechargeable secondary cell, and/or a fuel cell.

The communication module 1190 may support establishment of a direct (e.g., wired) communication channel and/or wireless communication channel between the electronic device 1101 and other electronic devices (e.g., the electronic device 1102, the electronic device 1104, the server 1108, etc.) and communication via the established communication channel. The communication module 1190 may operate independently from the processor 1120 (e.g., the application processor, etc.) and include one or a plurality of communication processors that support direct communication and/or wireless communication. The communication module 1190 may include a wireless communication module 1192 (e.g., a cellular communication module, a short-distance wireless communication module, a global navigation satellite system (GNSS) communication module, etc.) and/or a wired communication module 1194 (e.g., a local area network (LAN) communication module, a power line communication module, etc.). Among these communication modules, the corresponding communication module may communicate with other electronic devices via the first network 1198 (e.g., a short-distance communication network, such as Bluetooth, WiFi Direct, and infrared data association (IrDA)) or the second network 1199 (e.g., a telecommunication network, such as a cellular network, Internet, and a computer network (e.g., LAN, WAN, etc.)). These other types of communication modules may be integrated into a single component (e.g., a single chip, etc.) or may be provided as a plurality of separate components (e.g., multiple chips). The wireless communication module 1192 may identify and authenticate the electronic device 1101 within the communication network, such as the first network 1198 and/or the second network 1199, using subscriber information (e.g., an international mobile subscriber identifier (IMSI), etc.) stored in the subscriber identification module 1196. For example, the communication module 1190 may perform wireless communication with an external device (e.g., a base station) based on the target beam selected based on the AoA distribution estimated via the neural networks of the processor 1120.

The antenna module 1197 may transmit signals and/or power to or receive signals and/or power from the outside (e.g., other electronic devices, etc.). The antenna may include a radiator including a conductive pattern formed on a substrate (e.g., a printed circuit board (PCB), etc.). The antenna module 1197 may include one or a plurality of antennas. If the plurality of antennas are provided, an antenna suitable for the communication method used in the communication network, such as the first network 1198 and/or the second network 1199, among the plurality of antennas may be selected by the communication module 1190. The signals and/or power may be transmitted or received between the communication module 1190 and other electronic devices via the selected antenna. In addition to the antenna, other components (e.g., a radio frequency integrated circuit (RFIC), etc.) may be provided as part of the antenna module 1197.

Some of the components may be connected to each other via communication methods between peripheral devices (a bus, a general purpose input and output (GPIO), a serial peripheral interface (SPI), a mobile industry processor interface (MIPI), etc.) and may exchange signals (e.g., commands, data, etc.).

The commands or data may be transmitted or received between the electronic device 1101 and the external electronic device 1104 via the server 1108 connected to the second network 1199. Other electronic devices 1102 and 1104 may be of the same or different types as the electronic device 1101. All or some of the operations performed on the electronic device 1101 may be executed on one or more of other electronic devices 1102, 1104, and 1108. For example, when the electronic device 1101 needs to perform certain functions or services, the electronic device 1101 may request one or more other electronic devices to perform part or all of the functions or services, instead of autonomously executing the functions or services. The one or more other electronic devices that receive the request may execute additional functions or services related to the request and may transmit the result of executions to the electronic device 1101. To this end, cloud computing, distributed computing, and/or client-server computing technologies may be used.

While the inventive concept has been particularly shown and described with reference to example embodiments thereof, it will be understood that various changes in form and details may be made therein without departing from the scope of the following claims and their equivalents thereof.

Annex A

The present invention can also be defined by reference to the following clauses:

Clause 1. An electronic device comprising:

at least one memory configured to store computer-readable instructions;
a communication interface comprising an antenna array, the antenna array being configured to form a plurality of candidate beams; and
at least one processor operatively connected to the communication interface and the at least one memory, wherein the at least one processor is configured to execute the computer-readable instructions to:

generate a plurality of pieces of reference signal received power (RSRP) pattern data based on an RSRP measured in each of the plurality of candidate beams with respect to a signal received from an external device;
estimate an angle of arrival (AoA) distribution for each of the plurality of pieces of RSRP pattern data, by applying each of the plurality of pieces of RSRP pattern data to a neural network that is trained based on a deep-learning algorithm; and
perform a beam management for a wireless communication with the external device, based on the estimated AoA distribution.

Clause 2. The electronic device of clause 1, wherein the neural network is trained, via the deep-learning algorithm, to estimate an AoA distribution corresponding to each of a plurality of pieces of RSRP pattern training data with respect to the plurality of candidate beams, by using the plurality of pieces of RSRP pattern training data as input data.

Clause 3. The electronic device of clause 1 or clause 2, wherein the AoA distribution, output from the neural network, comprises a distribution of matching probabilities between each of the plurality of pieces of RSRP pattern data and each of AoA classes.

Clause 4. The electronic device of any of clauses 1 to 3, wherein, in performing the beam management, the at least one processor is configured to execute the computer-readable instructions to:

identify whether a dominant AoA class exists in the AoA distribution, the dominant AoA class having a highest matching probability with a corresponding piece of RSRP pattern data;
select, as a target beam, a beam corresponding to the dominant AoA class, based on identifying that the dominant AoA class exists; and
perform the wireless communication with the external device using the target beam.

Clause 5. The electronic device of any of clauses 1 to 4, wherein, in performing the beam management, the at least one processor is configured to execute the computer-readable instructions to:

select at least two candidate AoA classes based on the AoA distribution;
perform a beam training based on beams corresponding to the at least two candidate AoA classes, and select a target beam based on a result of the beam training; and
perform the wireless communication with the external device using the target beam.

Clause 6. The electronic device of clause 5, wherein each of the at least two candidate AoA classes has a matching probability with a corresponding piece of RSRP pattern data greater than or equal to a predetermined threshold in the AoA distribution.

Clause 7. The electronic device of clause 5 or clause 6, wherein, in selecting the target beam based on the result of the beam training, the at least one processor is configured to execute the computer-readable instructions to:

measure at least one channel indicator for channels based on beams corresponding to the at least two candidate AoA classes; and
select the target beam based on the at least one channel indicator,
wherein the at least one channel indicator comprises at least one of a RSRP, a signal-to-noise ratio (SNR), and a reference signal received quality (RSRQ) of a signal passing through the channels.

Clause 8. The electronic device of any of clauses 5 to 6, wherein the at least one processor is further configured to select, as the target beam, a beam generated by combining beams corresponding to the at least two candidate AoA classes together.

Clause 9. The electronic device of any of clauses 1 to 8, further comprising at least one sensor, wherein the at least one processor is further configured to execute the computer-readable instructions to:

select a target beam among the plurality of candidate beams based on the estimated AoA distribution;
receive, from the at least one sensor, sensing data related to a change in at least one of a position or an orientation of the electronic device;
obtain first position coordinates of the electronic device before the change of the electronic device, based on AoA class information corresponding to the target beam;
obtain, based on the sensing data and the first position coordinates, second position coordinates of the electronic device after the change of the electronic device;
generate correction information based on the first position coordinates and the second position coordinates; and
select, as a final target beam, a beam generated by correcting the target beam based on the correction information.

Clause 10. A method of operating an electronic device, the method comprising:

generating a plurality of pieces of reference signal received power (RSRP) pattern data based on an RSRP measured in each of a plurality of candidate beams with respect to a signal received from an external device;
estimating an angle of arrival (AoA) distribution for each of the plurality of pieces of RSRP pattern data by applying each of the plurality of pieces of RSRP pattern data to a neural network that is trained based on a deep-learning algorithm; and
performing a beam management for a wireless communication with the external device, based on the estimated AoA distribution.

Clause 11. The method of clause 10, wherein the performing the beam management comprises:

identifying whether a dominant AoA class exists in the AoA distribution, the dominant AoA class having a highest matching probability with a corresponding piece of RSRP pattern data;
selecting, as a target beam, a beam corresponding to the dominant AoA class based on identifying that the dominant AoA class exists; and
performing the wireless communication with the external device using the target beam.

Clause 12. The method of clause 10 or clause 11, wherein the performing the beam management comprises:

selecting at least two candidate AoA classes based on the AoA distribution;
performing a beam training based on beams corresponding to the at least two candidate AoA classes, and selecting a target beam based on a result of the beam training; and
performing the wireless communication with the external device using the target beam.

Clause 13. The method of clause 12, wherein the selecting the target beam comprises:

measuring at least one channel indicator for channels based on beams corresponding to the at least two candidate AoA classes; and
selecting the target beam based on the at least one channel indicator,
wherein the at least one channel indicator comprises at least one of a RSRP, a signal-to-noise ratio (SNR), and a reference signal received quality (RSRQ) of a signal passing through the channels.

Clause 14. The method of any of clauses 10 to 13, further comprising:

selecting a target beam among the plurality of candidate beams based on the estimated AoA distribution;
receiving sensing data related to a change in at least one of a position or an orientation of the electronic device;
obtaining first position coordinates of the electronic device before the change of the electronic device, based on AoA class information corresponding to the target beam;
obtaining based on the sensing data and the first position coordinates, second position coordinates of the electronic device after the change of the electronic device;
generating correction information based on the first position coordinates and the second position coordinates; and
selecting, as a final target beam, a beam generated by correcting the target beam based on the correction information.

Clause 15. A method of operating a wireless communication system, the method comprising:

forming a plurality of candidate beams for performing a wireless communication with an external device;
generating an angle of arrival (AoA) estimation model via deep-learning, by using, as input, a plurality of pieces of reference signal received power (RSRP) pattern training data for the plurality of candidate beams and using, as output, an AoA distribution corresponding to each of the plurality of pieces of RSRP pattern training data;
generating a plurality of pieces of RSRP pattern data by measuring an RSRP in each of the plurality of candidate beams with respect to a signal received from the external device;
estimating an AoA distribution for each of the plurality of pieces of RSRP pattern data, by applying each of the plurality of pieces of RSRP pattern data to the AoA estimation model; and
performing a beam management based on the estimated AoA distribution.

## Claims

**1.** An electronic device comprising:

at least one memory configured to store computer-readable instructions;
a communication interface comprising an antenna array, the antenna array being configured to form a plurality of candidate beams; and
at least one processor operatively connected to the communication interface and the at least one memory, wherein the at least one processor is configured to execute the computer-readable instructions to:

generate a plurality of pieces of reference signal received power (RSRP) pattern data based on a reference signal received power measured in each of the plurality of candidate beams with respect to a signal received from an external device;
estimate an angle of arrival (AoA) distribution for the plurality of pieces of reference signal received power pattern data, by applying each of the plurality of pieces of reference signal received power pattern data to a neural network that is trained based on a deep-learning algorithm; and
perform a beam management for a wireless communication with the external device, based on the estimated angle of arrival distribution.

**2.** The electronic device of claim 1, wherein the neural network is trained, via the deep-learning algorithm, to estimate angle of arrival distributions corresponding to each of a plurality of pieces of RSRP pattern training data with respect to the plurality of candidate beams, by using the plurality of pieces of RSRP pattern training data as input data to the neural network.

**3.** The electronic device of claim 1 or claim 2, wherein the angle of arrival distribution, output from the neural network, comprises a distribution of matching probabilities between each of the plurality of pieces of reference signal received power pattern data and each of angle of arrival classes.

**4.** The electronic device of any preceding claim, wherein, in performing the beam management, the at least one processor is configured to execute the computer-readable instructions to:

identify whether a dominant angle of arrival class exists in the angle of arrival distribution, the dominant angle of arrival class having a highest matching probability with a corresponding piece of reference signal received power pattern data;
select, as a target beam, a beam corresponding to the dominant angle of arrival class, based on identifying that the dominant angle of arrival class exists; and
perform the wireless communication with the external device using the target beam.

**5.** The electronic device of any preceding claim, wherein, in performing the beam management, the at least one processor is configured to execute the computer-readable instructions to:

select at least two candidate angle of arrival classes based on the angle of arrival distribution;
perform a beam training based on beams corresponding to the at least two candidate angle of arrival classes, and select a target beam based on a result of the beam training; and
perform the wireless communication with the external device using the target beam.

**6.** The electronic device of claim 5, wherein each of the at least two candidate angle of arrival classes has a matching probability with a corresponding piece of reference signal received power pattern data greater than or equal to a predetermined threshold in the angle of arrival distribution.

**7.** The electronic device of claim 5 or claim 6, wherein, in selecting the target beam based on the result of the beam training, the at least one processor is configured to execute the computer-readable instructions to:

measure at least one channel indicator for channels based on beams corresponding to the at least two candidate angle of arrival classes; and
select the target beam based on the at least one channel indicator,
wherein the at least one channel indicator comprises at least one of a reference signal received power, a signal-to-noise ratio, and a reference signal received quality of a signal passing through the channels.

**8.** The electronic device of claim 5 or claim 6, wherein the at least one processor is further configured to select, as the target beam, a beam generated by combining beams corresponding to the at least two candidate angle of arrival classes together.

**9.** The electronic device of any preceding claim, further comprising at least one sensor,
wherein the at least one processor is further configured to execute the computer-readable instructions to:

select a target beam among the plurality of candidate beams based on the estimated angle of arrival distribution;
receive, from the at least one sensor, sensing data related to a change in at least one of a position or an orientation of the electronic device;
obtain first position coordinates of the electronic device before the change of the electronic device, based on angle of arrival class information corresponding to the target beam;
obtain, based on the sensing data and the first position coordinates, second position coordinates of the electronic device after the change of the electronic device;
generate correction information based on the first position coordinates and the second position coordinates; and
select, as a final target beam, a beam generated by correcting the target beam based on the correction information.

**10.** A method of operating an electronic device, the method comprising:

generating a plurality of pieces of reference signal received power pattern data based on an reference signal received power measured in each of a plurality of candidate beams with respect to a signal received from an external device;
estimating an angle of arrival distribution for each of the plurality of pieces of reference signal received power pattern data by applying each of the plurality of pieces of reference signal received power pattern data to a neural network that is trained based on a deep-learning algorithm; and
performing a beam management for a wireless communication with the external device, based on the estimated angle of arrival distribution.

**11.** The method of claim 10, wherein the performing the beam management comprises:

identifying whether a dominant angle of arrival class exists in the angle of arrival distribution, the dominant angle of arrival class having a highest matching probability with a corresponding piece of reference signal received power pattern data;
selecting, as a target beam, a beam corresponding to the dominant angle of arrival class based on identifying that the dominant angle of arrival class exists; and
performing the wireless communication with the external device using the target beam.

**12.** The method of claim 10 or claim 11, wherein the performing the beam management comprises:

selecting at least two candidate angle of arrival classes based on the angle of arrival distribution;
performing a beam training based on beams corresponding to the at least two candidate angle of arrival classes, and selecting a target beam based on a result of the beam training; and
performing the wireless communication with the external device using the target beam.

**13.** The method of claim 12, wherein the selecting the target beam comprises:

measuring at least one channel indicator for channels based on beams corresponding to the at least two candidate angle of arrival classes; and
selecting the target beam based on the at least one channel indicator,
wherein the at least one channel indicator comprises at least one of a reference signal received power, a signal-to-noise ratio, and a reference signal received quality of a signal passing through the channels.

**14.** The method of any of claims 10 to 13, further comprising:

selecting a target beam among the plurality of candidate beams based on the estimated angle of arrival distribution;
receiving sensing data related to a change in at least one of a position or an orientation of the electronic device;
obtaining first position coordinates of the electronic device before the change of the electronic device, based on angle of arrival class information corresponding to the target beam;
obtaining based on the sensing data and the first position coordinates, second position coordinates of the electronic device after the change of the electronic device;
generating correction information based on the first position coordinates and the second position coordinates; and
selecting, as a final target beam, a beam generated by correcting the target beam based on the correction information.

**15.** A method of any of claims 10 to 14, the method comprising:

forming a plurality of candidate beams for performing a wireless communication with an external device; and
generating the neural network via deep-learning, by using, as input, a plurality of pieces of reference signal received power pattern training data for the plurality of candidate beams and using, as output, angle of arrival distributions corresponding to each of the plurality of pieces of reference signal received power pattern training data.

FIG. 1

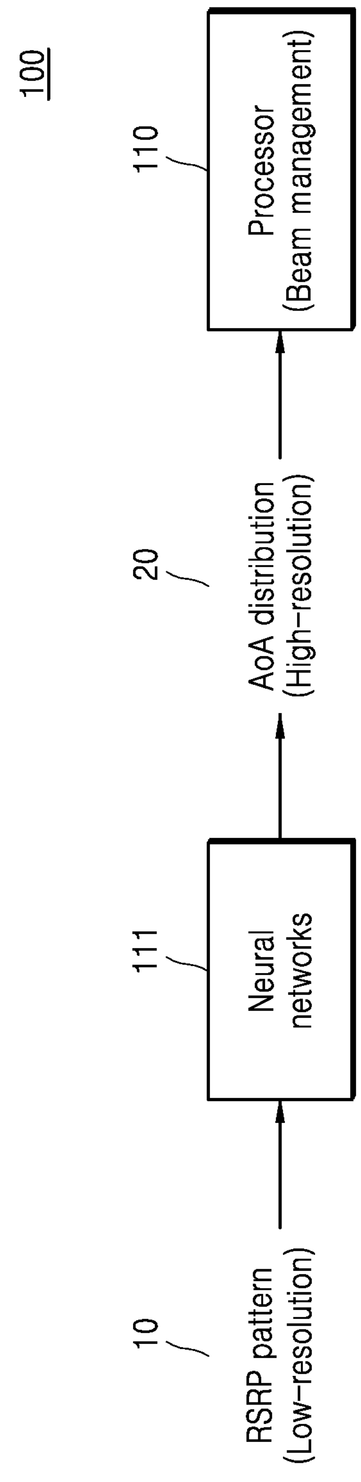
100
110
Processor
(Beam management)
20
AoA distribution
(High-resolution)
111
Neural
networks
10
RSRP pattern
(Low-resolution)

FIG. 2

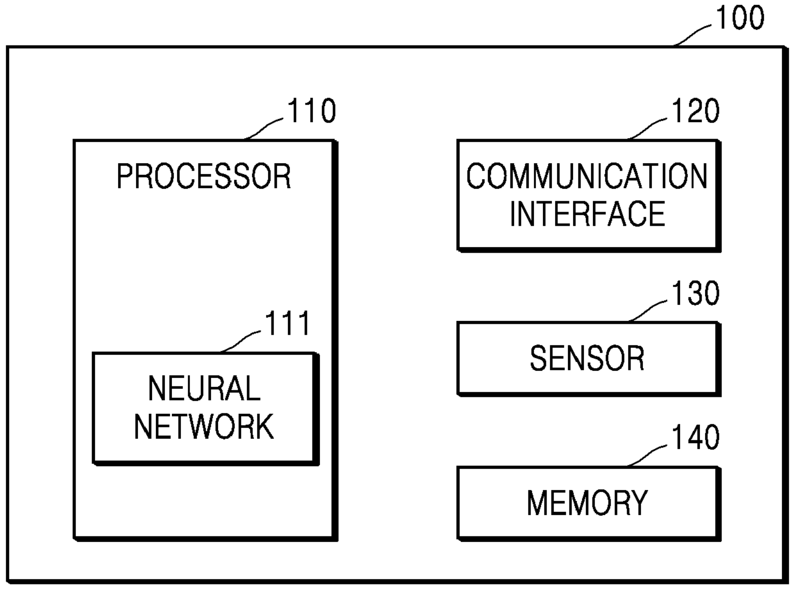
100
110
PROCESSOR
111
NEURAL
NETWORK
120
COMMUNICATION
INTERFACE
130
SENSOR
140
MEMORY

FIG. 3A

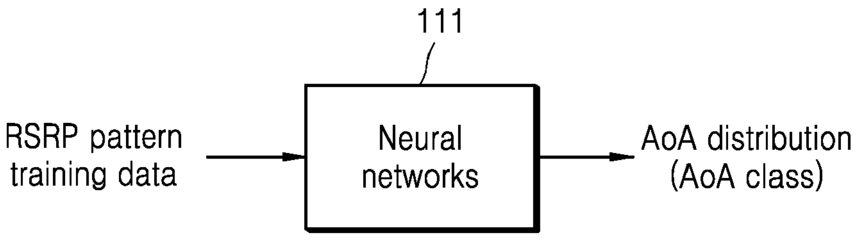
111
RSRP pattern
training data
Neural
networks
AoA distribution
(AoA class)

FIG. 3B

311 315

| | 0 (−60°) | 1 (−40°) | 2 (−20°) | 3 (0°) | 4 (20°) | 5 (40°) | 6 (60°) | Angle |
|---|---|---|---|---|---|---|---|---|
| t1 | −96.81 | −108.89 | −108.80 | −106.64 | −104.97 | −100.73 | −95.16 | 0° |
| t2 | −97.36 | −102.84 | −106.97 | −107.85 | −110.35 | −100.27 | −95.88 | 5° |
| ⋮ | | | | | | | | |

321 325

FIG. 3C

351 355

| | 0 (−60°) | 1 (−40°) | 2 (−20°) | 3 (0°) | 4 (20°) | 5 (40°) | 6 (60°) | Angle |
|---|---|---|---|---|---|---|---|---|
| T1 | −114.81 | −93.88 | −90.49 | −99.22 | −101.16 | −101.89 | −96.99 | 50° |
| T2 | −100.07 | −107.60 | −102.50 | −104.92 | −100.06 | −98.10 | −100.55 | 75° |
| ⋮ | | | | | | | | |

361 365

FIG. 4A

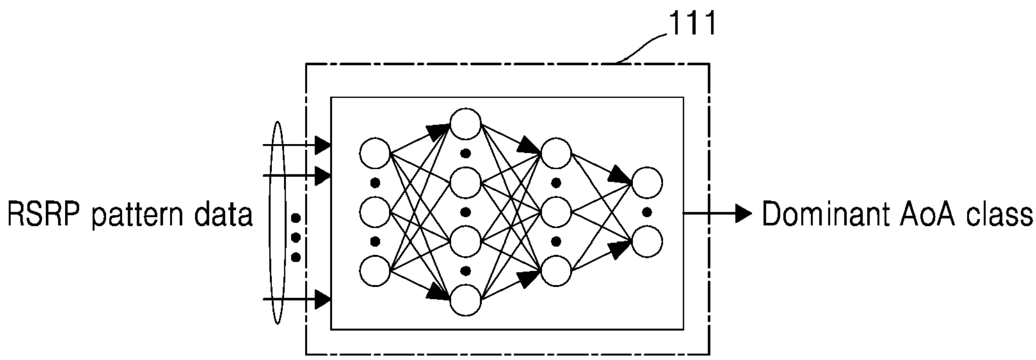

FIG. 4B

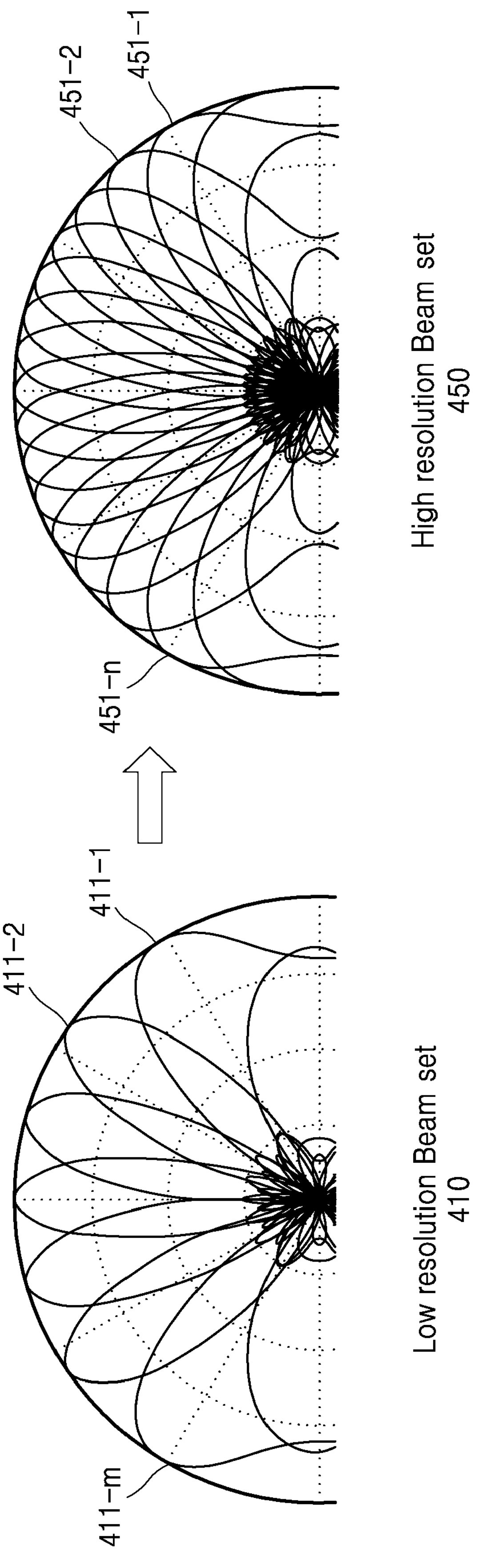
451-2
451-1
451-n
High resolution Beam set
450
411-2
411-1
411-m
Low resolution Beam set
410

FIG. 5A

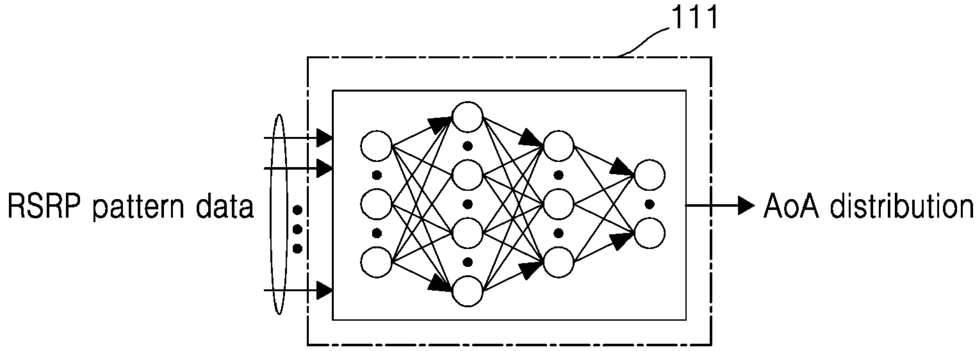
111
RSRP pattern data
AoA distribution

FIG. 5B

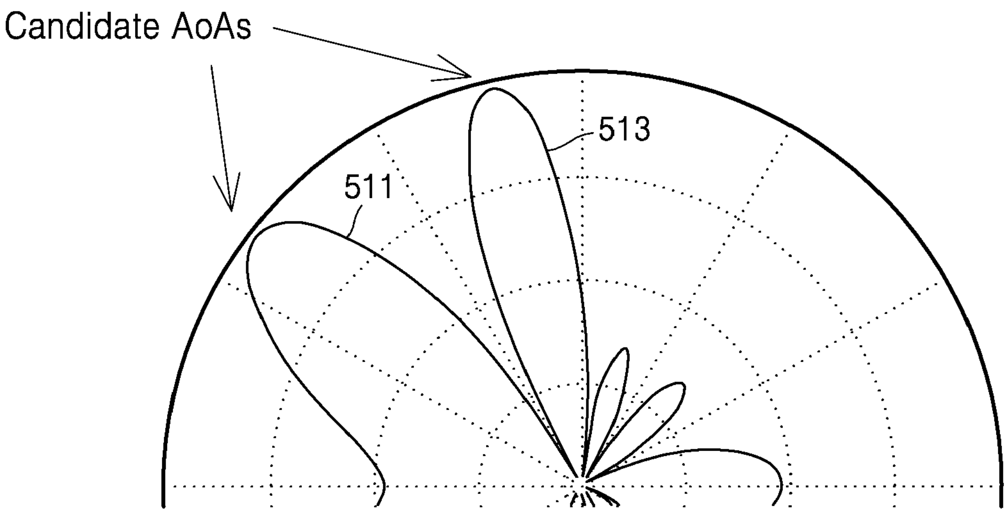
Candidate AoAs
513
511

# FIG. 5C

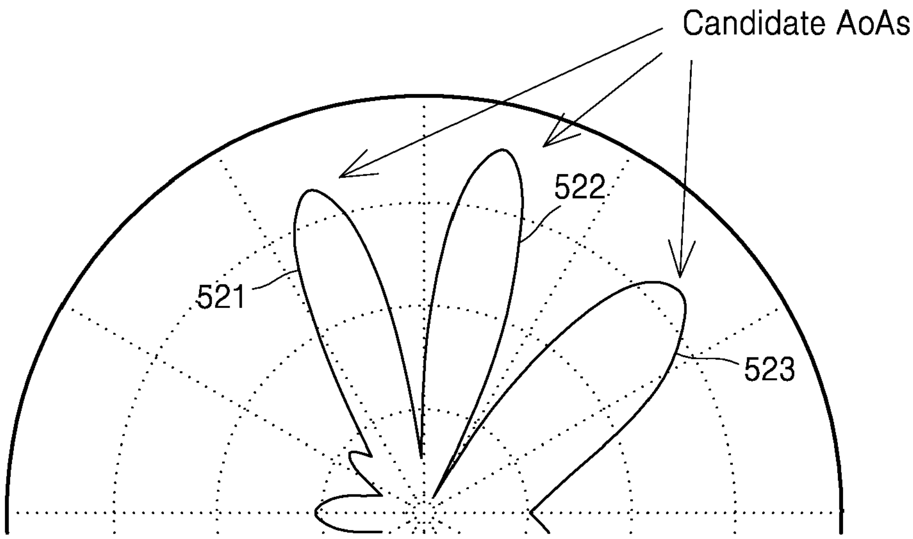
Candidate AoAs
521
522
523

# FIG. 6

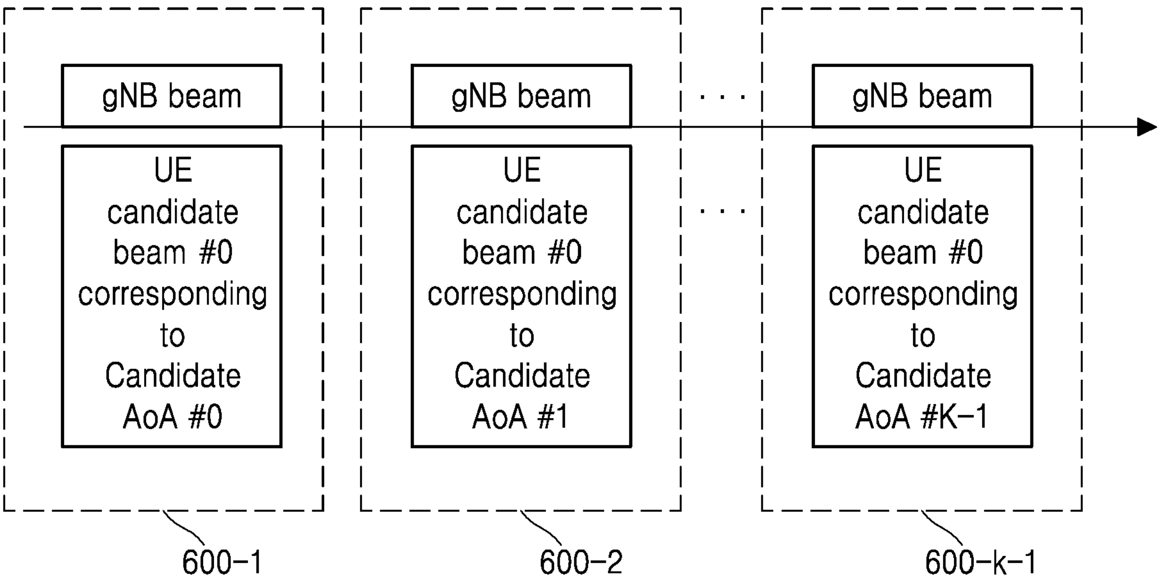
gNB beam
UE candidate beam #0 corresponding to Candidate AoA #0
gNB beam
UE candidate beam #0 corresponding to Candidate AoA #1
. . .
. . .
gNB beam
UE candidate beam #0 corresponding to Candidate AoA #K-1
600-1
600-2
600-k-1

FIG. 7

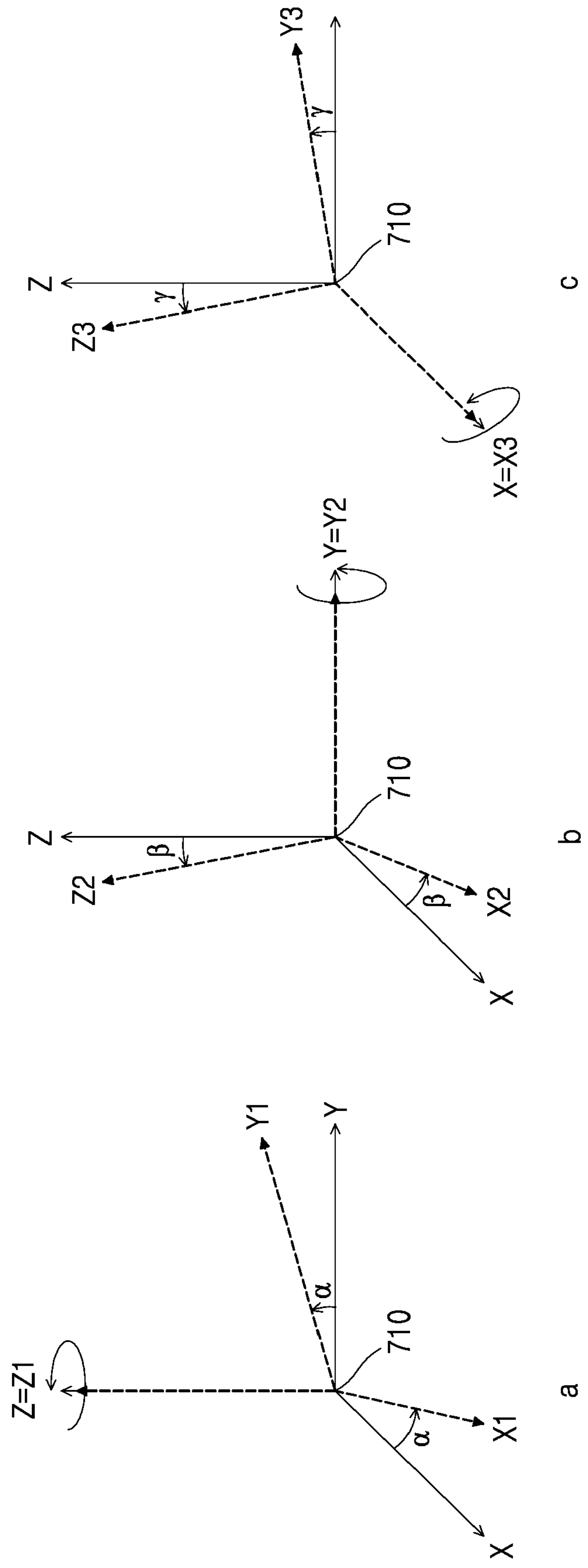

FIG. 8

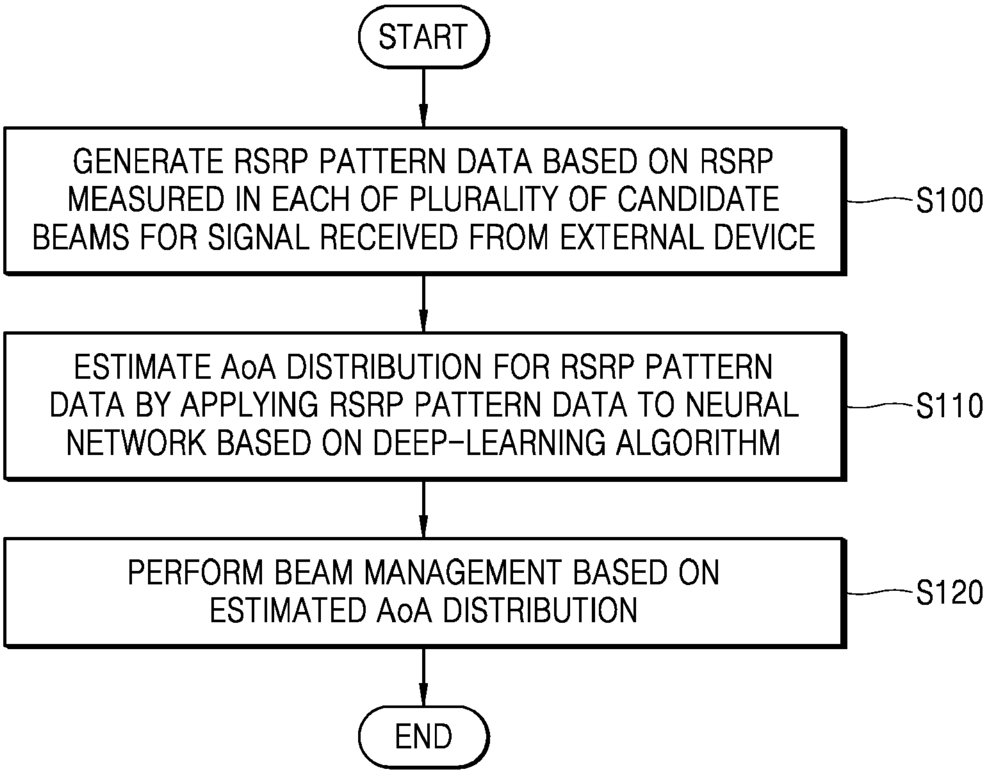
START
GENERATE RSRP PATTERN DATA BASED ON RSRP MEASURED IN EACH OF PLURALITY OF CANDIDATE BEAMS FOR SIGNAL RECEIVED FROM EXTERNAL DEVICE
S100
ESTIMATE AoA DISTRIBUTION FOR RSRP PATTERN DATA BY APPLYING RSRP PATTERN DATA TO NEURAL NETWORK BASED ON DEEP-LEARNING ALGORITHM
S110
PERFORM BEAM MANAGEMENT BASED ON ESTIMATED AoA DISTRIBUTION
S120
END

FIG. 9

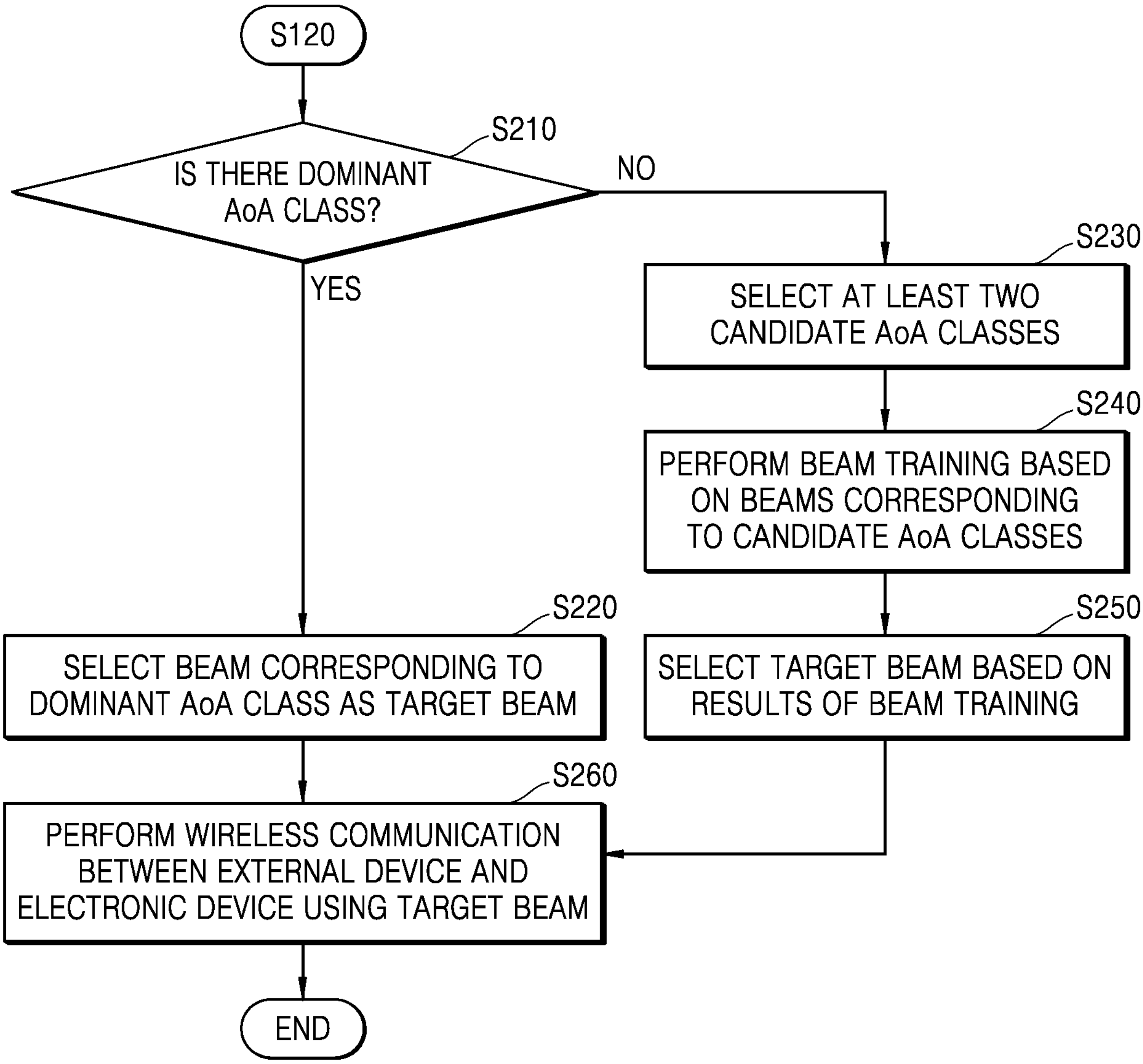
S120
S210
IS THERE DOMINANT AoA CLASS?
NO
YES
S230
SELECT AT LEAST TWO CANDIDATE AoA CLASSES
S240
PERFORM BEAM TRAINING BASED ON BEAMS CORRESPONDING TO CANDIDATE AoA CLASSES
S220
SELECT BEAM CORRESPONDING TO DOMINANT AoA CLASS AS TARGET BEAM
S250
SELECT TARGET BEAM BASED ON RESULTS OF BEAM TRAINING
S260
PERFORM WIRELESS COMMUNICATION BETWEEN EXTERNAL DEVICE AND ELECTRONIC DEVICE USING TARGET BEAM
END

# FIG. 10

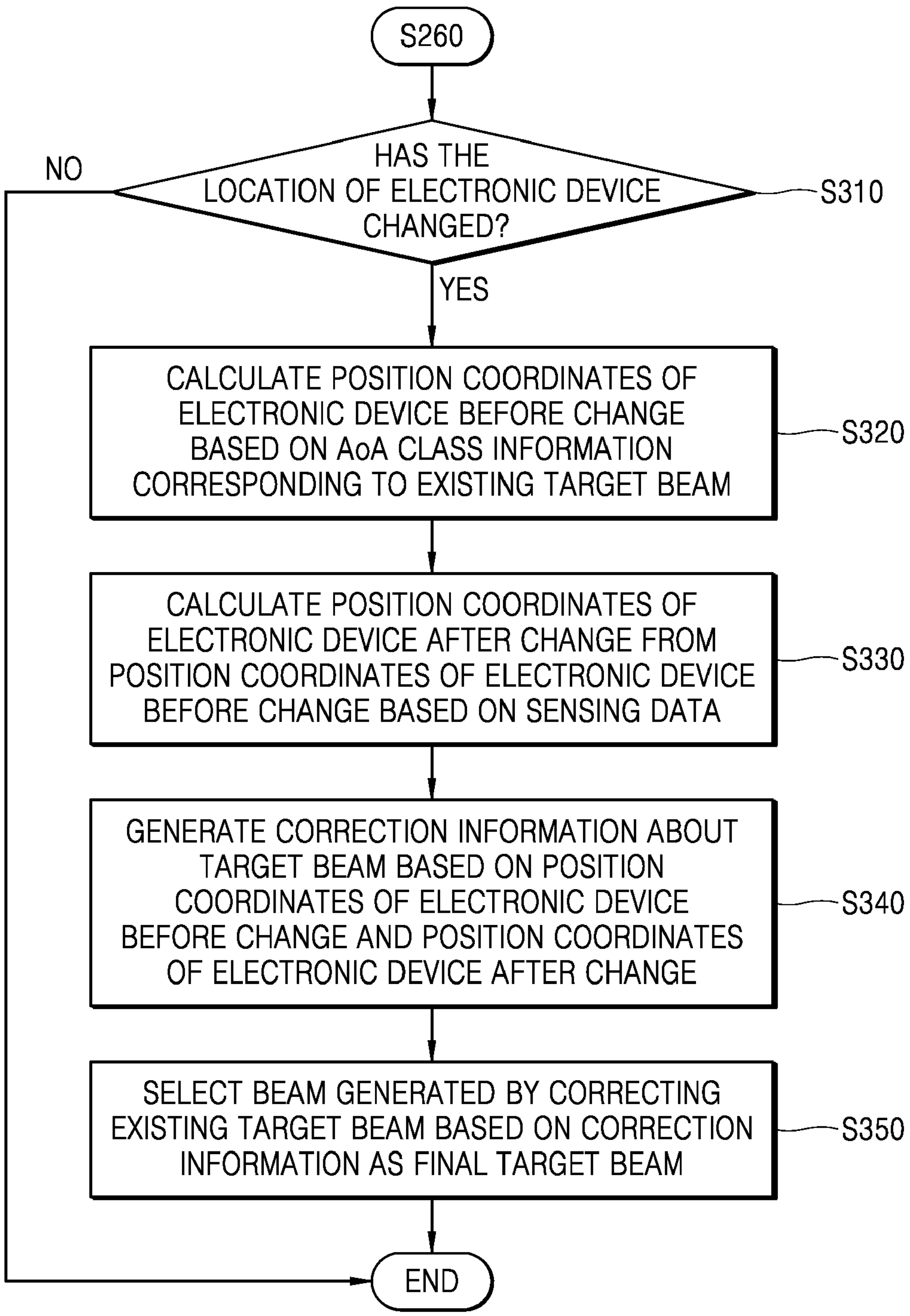
S260
HAS THE LOCATION OF ELECTRONIC DEVICE CHANGED?
S310
NO
YES
CALCULATE POSITION COORDINATES OF ELECTRONIC DEVICE BEFORE CHANGE BASED ON AoA CLASS INFORMATION CORRESPONDING TO EXISTING TARGET BEAM
S320
CALCULATE POSITION COORDINATES OF ELECTRONIC DEVICE AFTER CHANGE FROM POSITION COORDINATES OF ELECTRONIC DEVICE BEFORE CHANGE BASED ON SENSING DATA
S330
GENERATE CORRECTION INFORMATION ABOUT TARGET BEAM BASED ON POSITION COORDINATES OF ELECTRONIC DEVICE BEFORE CHANGE AND POSITION COORDINATES OF ELECTRONIC DEVICE AFTER CHANGE
S340
SELECT BEAM GENERATED BY CORRECTING EXISTING TARGET BEAM BASED ON CORRECTION INFORMATION AS FINAL TARGET BEAM
S350
END

FIG. 11

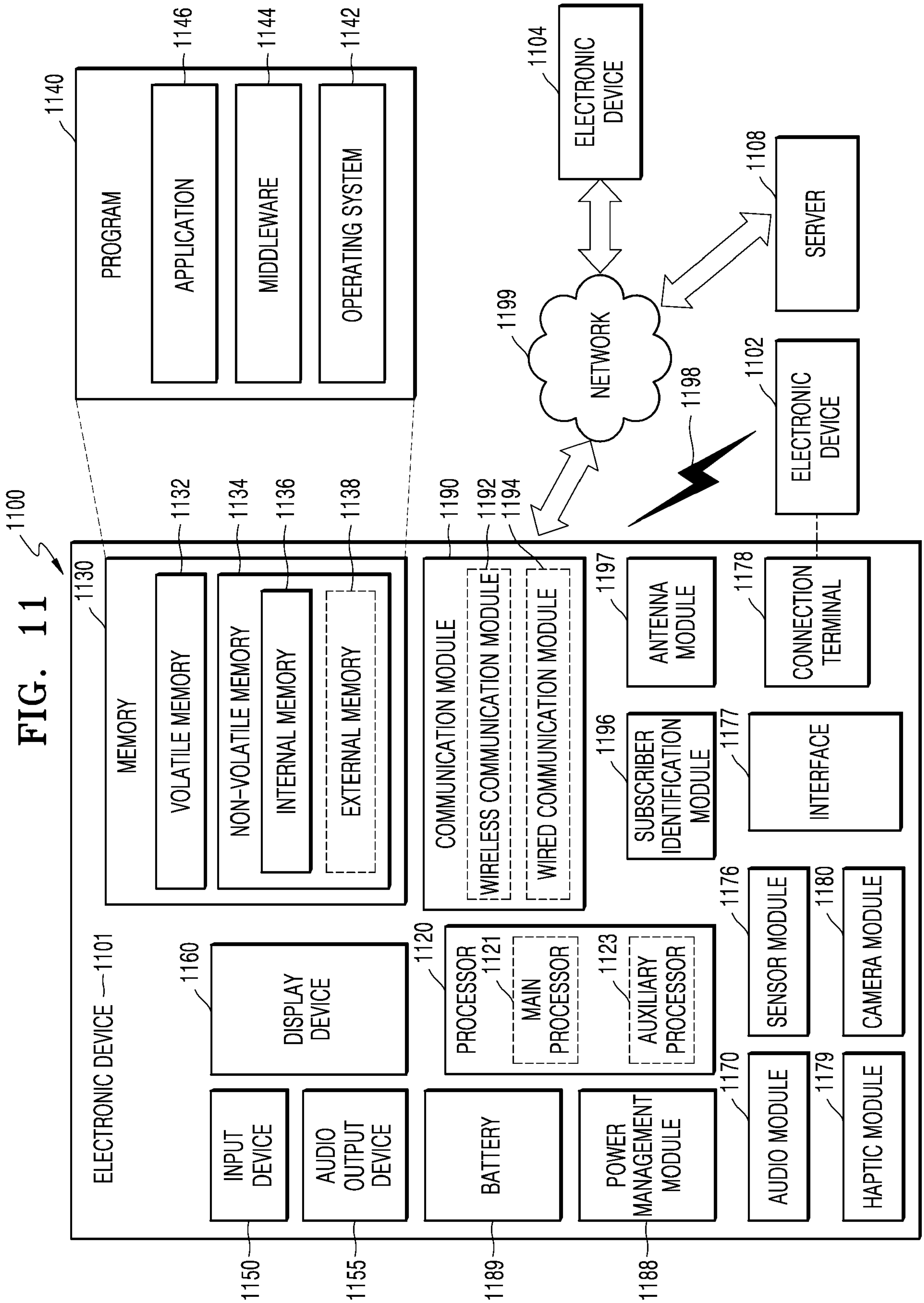
1100
ELECTRONIC DEVICE 1101
1130
MEMORY
VOLATILE MEMORY 1132
NON-VOLATILE MEMORY 1134
INTERNAL MEMORY 1136
EXTERNAL MEMORY 1138
1140
PROGRAM
APPLICATION 1146
MIDDLEWARE 1144
OPERATING SYSTEM 1142
COMMUNICATION MODULE 1190
WIRELESS COMMUNICATION MODULE 1192
WIRED COMMUNICATION MODULE 1194
ANTENNA MODULE 1197
CONNECTION TERMINAL 1178
SUBSCRIBER IDENTIFICATION MODULE 1196
INTERFACE 1177
SENSOR MODULE 1176
CAMERA MODULE 1180
AUDIO MODULE 1170
HAPTIC MODULE 1179
DISPLAY DEVICE 1160
PROCESSOR 1120
MAIN PROCESSOR 1121
AUXILIARY PROCESSOR 1123
INPUT DEVICE 1150
AUDIO OUTPUT DEVICE 1155
BATTERY 1189
POWER MANAGEMENT MODULE 1188
NETWORK 1199
1198
ELECTRONIC DEVICE 1104
SERVER 1108
ELECTRONIC DEVICE 1102

Europäisches Patentamt
European Patent Office
Office européen des brevets

# EUROPEAN SEARCH REPORT

Application Number
EP 24 19 2142

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/167875 A1 (SHEN SONGHUI [CN] ET AL) 3 June 2021 (2021-06-03)<br>* paragraph [0085] - paragraph [0088]; figure 1 *<br>* paragraph [0160] - paragraph [0184] *<br>* paragraph [0015] *<br>----- | 1-15 | INV.<br>H04B7/08<br>H04B7/06 |
| A | MA KE ET AL: "Deep Learning Assisted Calibrated Beam Training for Millimeter-Wave Communication Systems", IEEE TRANSACTIONS ON COMMUNICATIONS, IEEE SERVICE CENTER, PISCATAWAY, NJ. USA, vol. 69, no. 10, 21 July 2021 (2021-07-21), pages 6706-6721, XP011883431, ISSN: 0090-6778, DOI: 10.1109/TCOMM.2021.3098683 [retrieved on 2021-10-14]<br>* Section II-C *<br>----- | 1-15 | |
| A | US 2020/366340 A1 (ZHANG YIYAN [CN] ET AL) 19 November 2020 (2020-11-19)<br>* paragraph [0011] - paragraph [0036] *<br>----- | 9,14 | TECHNICAL FIELDS SEARCHED (IPC)<br>H04B |

The present search report has been drawn up for all claims

2

| Place of search | Date of completion of the search | Examiner |
|---|---|---|
| Munich | 17 December 2024 | Epple, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 19 2142

This annex lists the patent family members relating to the patent documents cited in the above-mentioned European search report. The members are as contained in the European Patent Office EDP file on
The European Patent Office is in no way liable for these particulars which are merely given for the purpose of information.

17-12-2024

| Patent document cited in search report | Publication date | Patent family member(s) | Publication date |
|---|---|---|---|
| US 2021167875 A1 | 03-06-2021 | CN 112886996 A | 01-06-2021 |
| | | EP 4018557 A1 | 29-06-2022 |
| | | US 2021167875 A1 | 03-06-2021 |
| | | WO 2021107472 A1 | 03-06-2021 |
| US 2020366340 A1 | 19-11-2020 | CN 111954228 A | 17-11-2020 |
| | | CN 117835259 A | 05-04-2024 |
| | | EP 3925086 A1 | 22-12-2021 |
| | | KR 20200132735 A | 25-11-2020 |
| | | US 2020366340 A1 | 19-11-2020 |
| | | WO 2020231193 A1 | 19-11-2020 |

EPO FORM P0459

For more details about this annex : see Official Journal of the European Patent Office, No. 12/82